# EUROPEAN PATENT APPLICATION

(11) **EP 4 822 681 A1**
(43) Date of publication of application: **14.10.2026**
(21) Application number: 24917352.7
(22) Date of filing: 11.01.2024
(51) Int. Cl.: G09G 3/32

(54) **IMAGE DISPLAY DEVICE AND VIDEO WALL INCLUDING SAME**

(71) Applicant: LG Electronics Inc., Yeongdeungpo-gu Seoul 07336 (KR)
(72) Inventor: JEONG, Jaehoon, Seoul 06772 (KR); KIM, Daejoong, Seoul 06772 (KR); YANG, Sunghyun, Seoul 06772 (KR); LEE, Jaewoon, Seoul 06772 (KR); LEE, Heeyoung, Seoul 06772 (KR); KIM, Dongsu, Seoul 06772 (KR); PARK, Chansic, Seoul 06772 (KR); CHOI, Gyuri, Seoul 06772 (KR); KIM, Jingyeong, Seoul 06772 (KR)
(74) Representative: Vossius & Partner Patentanwälte Rechtsanwälte mbB
(86) International application number: PCT/KR2024/000518
(87) International publication number: WO 2025/150586

(57) **Abstract**

An image display apparatus and a video wall including the same of the present disclosure includes: a panel including a plurality of light emitting diodes; a signal processing device; and a driving controller to output scan signal and data signal, and the signal processing device is configured to in response to an input gray level of a first pixel being less than a reference gray level, perform a first gray level compensation mode for decreasing an input gray level, and in response to an input gray level of a second pixel having a lower luminance increase amount than the first pixel and being less than the reference gray level, perform a second gray level compensation mode for increasing the input gray level and controlling the increased input gray level to be greater than the reference gray level. Accordingly, it is possible to maintain luminance uniformity between pixels.

## Description

### BACKGROUND

### 1. Field

The present disclosure relates to an image display apparatus, and a video wall including the same, and more particularly, to an image display apparatus capable of maintaining luminance uniformity between pixels, and a video wall including the same.

### 2. Description of the Related Art

An image display apparatus is an apparatus with a display that displays images.

Various types of displays are used in the image display apparatus, including a liquid crystal display panel, a light emitting diode panel, etc.

For a light emitting diode panel-based image display apparatus, an active matrix driving scheme or a passive-matrix driving scheme is used in order to drive the light emitting diode panel.

When driving the light emitting diode panel-based image display apparatus based on the passive-matrix driving scheme, light emitting diodes are made to emit light or not by using a plurality of subframes.

Meanwhile, according to a gray level of an image signal, during a plurality of subframe periods, a corresponding data signal is applied, so the light emitting diode is emitted.

Meanwhile, when a plurality of driving drivers are used to drive a plurality of light emitting diodes, there is a problem that luminance uniformity are not maintained depending on an input gray level.

Furthermore, there is a problem that luminance is not uniform between adjacent pixels, resulting in breaking of luminance uniformity and occurrence of flicker.

### SUMMARY

An object of the present disclosure is to provide an image display apparatus capable of maintaining luminance uniformity between pixels, and a video wall including the same.

Another object of the present disclosure is to provide an image display apparatus capable of decreasing flicker while maintaining the luminance uniformity depending on an input gray level, and a video wall including the same.

In order to achieve the objects, an image display apparatus according to an embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and the signal processing device is configured to in response to an input gray level of a first pixel being less than a reference gray level, perform a first gray level compensation mode for decreasing an input gray level of the first pixel, and in response to an input gray level of a second pixel having a lower luminance increase amount than the first pixel and being less than the reference gray level, perform a second gray level compensation mode for increasing the input gray level of the second pixel and controlling the increased input gray level of the second pixel to be greater than the reference gray level.

Meanwhile, the signal processing device can be configured to while performing the first gray level compensation mode, decrease the input gray level of the first pixel, in response to the first pixel being less than the reference gray level, and increase the input gray level of the second pixel, in response to the second pixel being less than the reference gray level.

Meanwhile, the signal processing device can control a magnitude of an increase amount of the input gray level of the second pixel in the second gray level compensation mode to be greater than a magnitude of a decrease amount of the input gray level of the first pixel in the first gray level compensation mode.

Meanwhile, the signal processing device can be configured to increase the input gray level of the second pixel to a second level greater than the reference gray level, in response to the input gray level of the second pixel being a first level less than the reference gray level.

Meanwhile, the signal processing device can be configured to decrease the input gray level of the first pixel to a third level less than the reference gray level, in response to the input gray level of the first pixel being the first level less than the reference gray level.

Meanwhile, the signal processing device can be configured to, in response to the input gray level of the first pixel being greater than the reference gray level, perform a third gray level compensation mode for increasing the input gray level of the first pixel and controlling the decreased gray level of the first pixel to be less than the reference gray level.

Meanwhile, the signal processing device can be configured to decrease the input gray level of the first pixel to a fifth level less than the reference gray level, in response to the input gray level of the first pixel being a fourth level greater than the reference gray level.

Meanwhile, the signal processing device can be configured to increase the input gray level of the second pixel to a sixth level greater than the reference gray level, in response to the input gray level of the second pixel being the fourth level greater than the reference gray level.

Meanwhile, the signal processing device can be configured to perform a fourth gray level compensation mode for increasing the input gray level of the second pixel, in response to the gray level of the second pixel being greater than the reference gray level.

Meanwhile, the signal processing device can be configured to, while performing the fourth gray level compensation mode, decrease the input gray level of the first pixel and control the decreased input gray level of the first pixel to be greater than the reference gray level, in response to the first pixel being greater than the reference gray level.

Meanwhile, while performing the fourth gray level compensation mode, the signal processing device can be configured to control a magnitude of an increase amount of the input gray level of the second pixel in the fourth gray level compensation mode to be greater than a magnitude of a decrease amount of the input gray level of the first pixel.

Meanwhile, signal processing device can be configured to set a gray level, to which a gray level is assigned to each of the plurality of subframe periods, as the reference gray level.

Meanwhile, the signal processing device can be configured to perform the first gray level compensation mode based on a gain of the first pixel or a gain of the second pixel.

Meanwhile, the signal processing device can be configured to perform the second gray level compensation mode based on the gain of the first pixel or the gain of the second pixel, and a ratio of a low gray level which is equal to or less than the reference level to a high gray level greater than the reference level.

Meanwhile, the signal processing device can be configured to perform the third gray level compensation mode based on the gain of the first pixel or the gain of the second pixel, and the ratio of the low gray level which is equal to or less than the reference level to the high gray level greater than the reference level.

Meanwhile, the signal processing device can be configured to perform the fourth gray level compensation mode based on the gain of the first pixel or the gain of the second pixel, and the ratio of the low gray level which is equal to or less than the reference level to the high gray level greater than the reference level.

An image display apparatus according to another embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and in response to an input gray level of a predetermined pixel being less than the reference gray level, the signal processing device is configured to increase the input gray level of the pixel and control the increased input gray level of the pixel to be greater than the reference gray level.

Meanwhile, the signal processing device can be configured to, in response to the input gray level of the second pixel being greater than the reference gray level, decrease the input gray level of the second pixel and control the decreased input gray level of the second pixel to be less than the reference gray level.

An image display apparatus according to yet another embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and in response to an input gray level of a predetermined pixel being greater than a reference gray level, the signal processing device is configured to decrease the input gray level of the pixel and control the decreased input gray level of the pixel to be less than the reference gray level.

### EFFECTS OF THE DISCLOSURE

An image display apparatus according to an embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and the signal processing device is configured to in response to an input gray level of a first pixel being less than a reference gray level, perform a first gray level compensation mode for decreasing an input gray level of the first pixel, and in response to an input gray level of a second pixel having a lower luminance increase amount than the first pixel and being less than the reference gray level, perform a second gray level compensation mode for increasing the input gray level of the second pixel and controlling the increased input gray level of the second pixel to be greater than the reference gray level. Accordingly, it is possible to maintain luminance uniformity between pixels. In particular, flicker can be reduced while maintaining the luminance uniformity according to the input gray level.

Meanwhile, the signal processing device can be configured to while performing the first gray level compensation mode, decrease the input gray level of the first pixel, in response to the gray level of the first pixel being less than the reference gray level, and increase the input gray level of the second pixel, in response to the gray level of the second pixel being less than the reference gray level. Accordingly, it is possible to maintain luminance uniformity between pixels.

Meanwhile, the signal processing device can control a magnitude of an increase amount of the input gray level of the second pixel in the second gray level compensation mode to be greater than a magnitude of a decrease amount of the input gray level of the first pixel in the first gray level compensation mode. Accordingly, it is possible to maintain luminance uniformity between pixels.

Meanwhile, the signal processing device can be configured to increase the input gray level of the second pixel to a second level greater than the reference gray level, in response to the input gray level of the second pixel being a first level less than the reference gray level. Accordingly, it is possible to maintain luminance uniformity between pixels.

Meanwhile, the signal processing device can be configured to decrease the input gray level of the first pixel to a third level less than the reference gray level, in response to the input gray level of the first pixel being the first level less than the reference gray level. Accordingly, it is possible to maintain luminance uniformity between pixels.

Meanwhile, the signal processing device can be configured to perform, in response to the input gray level of the first pixel being greater than the reference gray level, a third gray level compensation mode for decreasing the input gray level of the first pixel and controlling the decreased gray level of the first pixel to be less than the reference gray level. Accordingly, it is possible to maintain luminance uniformity between pixels.

Meanwhile, the signal processing device can be configured to decrease the input gray level of the first pixel to a fifth level less than the reference gray level, in response to the input gray level of the first pixel being a fourth level greater than the reference gray level. Accordingly, it is possible to maintain luminance uniformity between pixels.

Meanwhile, the signal processing device can be configured to increase the input gray level of the second pixel to a sixth level greater than the reference gray level, in response to the input gray level of the second pixel being the fourth level greater than the reference gray level. Accordingly, it is possible to maintain luminance uniformity between pixels.

Meanwhile, the signal processing device can be configured to perform a fourth gray level compensation mode for increasing the input gray level of the second pixel, in response to the gray level of the second pixel being greater than the reference gray level. Accordingly, it is possible to maintain luminance uniformity between pixels.

Meanwhile, the signal processing device can be configured to, while performing the fourth gray level compensation mode, in response to the gray level of the first pixel being greater than the reference gray level, decrease the input gray level of the first pixel and control the decreased input gray level of the first pixel to be greater than the reference gray level. Accordingly, it is possible to maintain luminance uniformity between pixels.

Meanwhile, while performing the fourth gray level compensation mode, the signal processing device can be configured to control a magnitude of an increase amount of the input gray level of the second pixel in the fourth gray level compensation mode to be greater than a magnitude of a decrease amount of the input gray level of the first pixel. Accordingly, it is possible to maintain luminance uniformity between pixels.

Meanwhile, signal processing device can be configured to set a gray level to which a gray level is assigned to each of the plurality of subframe periods, as the reference gray level. Accordingly, it is possible to maintain luminance uniformity between pixels.

Meanwhile, the signal processing device can be configured to perform the first gray level compensation mode based on a gain of the first pixel or a gain of the second pixel. Accordingly, it is possible to maintain luminance uniformity between pixels.

Meanwhile, the signal processing device can be configured to perform the second gray level compensation mode based on the gain of the first pixel or the gain of the second pixel, and a ratio of a low gray level which is equal to or less than the reference level to a high gray level greater than the reference level. Accordingly, it is possible to maintain luminance uniformity between pixels.

Meanwhile, the signal processing device can be configured to perform the third gray level compensation mode based on the gain of the first pixel or the gain of the second pixel, and the ratio of the low gray level which is equal to or less than the reference level to the high gray level greater than the reference level. Accordingly, it is possible to maintain luminance uniformity between pixels.

Meanwhile, the signal processing device can be configured to perform the fourth gray level compensation mode based on the gain of the first pixel or the gain of the second pixel, and the ratio of the low gray level which is equal to or less than the reference level to the high gray level greater than the reference level. Accordingly, it is possible to maintain luminance uniformity between pixels.

An image display apparatus according to another embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and in response to an input gray level of a predetermined pixel being less than the reference gray level, the signal processing device is configured to increase the input gray level of the pixel and control the increased input gray level of the pixel to be greater than the reference gray level. Accordingly, it is possible to maintain luminance uniformity between pixels. In particular, flicker can be reduced while maintaining the luminance uniformity according to the input gray level.

Meanwhile, the signal processing device can be configured to decrease, in response to the input gray level of the second pixel being greater than the reference gray level, the input gray level of the second pixel and control the decreased input gray level of the second pixel to be less than the reference gray level.

An image display apparatus according to yet another embodiment of the present disclosure includes: a panel including a plurality of light emitting diodes; a signal processing device configured to output an image signal; and a driving controller configured to output a scan signal for each of a plurality of subframe periods, and output a data signal for displaying an image, to the plurality of light emitting diodes based on the image signal, and in response to an input gray level of a predetermined pixel being greater than a reference gray level, the signal processing device is configured to decrease the input gray level of the pixel and control the decreased input gray level of the pixel to be less than the reference gray level. Accordingly, it is possible to maintain luminance uniformity between pixels. In particular, flicker can be reduced while maintaining the luminance uniformity according to the input gray level.

### BRIEF DESCRIPTION OF THE DRAWINGS

FIG. 1 is a diagram illustrating a video wall according to an embodiment of the present disclosure;
FIG. 2 is an example of an internal block diagram of a video wall of FIG. 1;
FIG. 3 is an example of an internal block diagram of an image display apparatus of FIG. 1;
FIG. 4 is an internal block diagram of a display of FIG. 2;
FIGS. 5A to 5C are diagrams referred to in the description of a light emitting diode panel of FIG. 4;
FIG. 6 is a diagram illustrating an example of the light emitting diode panel of FIG. 4;
FIGS. 7A to 8C are diagrams referred to in the description of an operation of an image display apparatus related to the present disclosure.
FIGS. 9A to 9C are diagrams referred to in the description of an operation of an image display apparatus according to an embodiment of the present disclosure.
FIGS. 10A and 10B are diagrams referred to in the description of an operation of an image display apparatus related to the present disclosure.
FIG. 11 is a diagram illustrating an operation of an image display apparatus according to an embodiment of the present disclosure.
FIGS. 12 to 14 are diagrams referred to in the description of FIG. 11.

### DETAILED DESCRIPTION OF THE PREFERRED EMBODIMENTS

Hereinafter, the present disclosure will be described in detail with reference to the accompanying drawings.

The suffixes "module" and "unit" in elements used in description below are given only in consideration of ease in preparation of the specification and do not have specific meanings or functions. Accordingly, the suffixes "module" and "unit" can be used interchangeably.

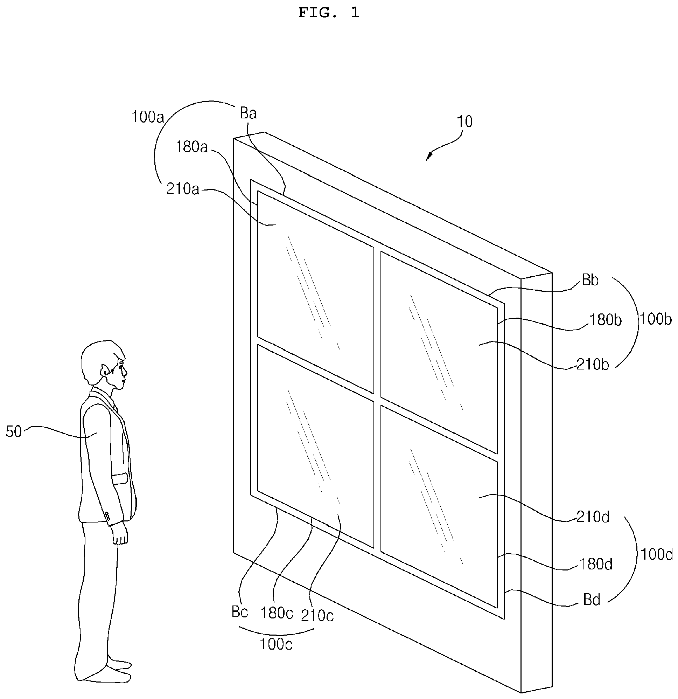

FIG. 1 is a diagram illustrating a video wall according to an embodiment of the present disclosure.

Referring to the drawing, the video wall 10 according to an embodiment of the present disclosure can include a plurality of image display apparatuses 100a to 100d.

The video wall 10 according to an embodiment of the present disclosure can receive images from the set-top box (not shown), the server (not shown), an internal memory, or the like.

For example, the video wall 10 can receive an image signal from the set-top box (not shown) through an HDMI terminal.

In another example, the video wall 10 can receive an image signal from the server (not shown) through a network terminal.

Meanwhile, the video wall 10 can be installed inside or outside a building.

For example, the video wall 10 can be provided in public places such as vehicles, bus terminals, railroad stations and airports, in order to provide information such as advertisements, news and notices. In addition, the display apparatus can be provided near display windows of department stores, shopping malls or markets, for advertisements of specific products.

In another example, the video wall 10 can be installed on a wall surface in a house.

The video wall 10 can comprise a plurality of displays 180a to 180d arranged contiguously.

Meanwhile, a plurality of displays 180a to 180d can be implemented with any one of various panels. For example, the plurality of displays 180a to 180d can be any one of a liquid crystal display (LCD) panel, a light emitting diode (OLED) panel, an inorganic light emitting diode (LED) panel, and the like.

The following description will be made based on an example in which the plurality of displays 180a to 180d comprise the inorganic light emitting diode (LED) panel.

Meanwhile, the inorganic light emitting diode (LED) panel includes light emitting diodes, and is advantageous in that it has a fast response speed and can reproduce colors very well.

Meanwhile, the plurality of displays 180a to 180d can comprise a plurality of panels 210a to 210d and bezels Ba to Bd surrounding the panels 210a to 210d, respectively.

In the drawing, the video wall 10 includes a plurality of image display apparatuses 100a to 100d including respective displays 180a to 180d.

Alternatively, for image display of the video wall 10, signal processing devices 170 to 170d provided respectively in the plurality of image display apparatuses 100a to 100d can be used.

For example, images distributed by the signal processing device 170 can be inputted into the signal processing devices 170 to 170d provided respectively in the plurality of image display devices 100a to 100d, and images whose image signals are processed by the respective signal processing devices 170 to 170d can be inputted into the respective displays 180a to 180d, and the respective displays 180a to 180d can display the images.

Accordingly, a viewer 50 can view the images displayed through the video wall 10 as shown in the drawing. In particular, the viewer can view the images displayed through the plurality of displays 180a to 180d.

In another example, the video wall 10 can comprise one signal processing device for commonly controlling the plurality of image display apparatuses 100a to 100d. The common signal processing device can perform signal processing on the displayed image. The processed images can be input to the displays 180a to 180d and the respective displays 180a to 180d can display the images.

Meanwhile, in the plurality of displays 180a to 180d, when an inorganic light emitting panel including a light emitting diode is driven based on a passive matrix scheme, the light emitting diode is emitted or not emitted.

However, when the plurality of light emitting diodes are driven, the luminance uniformity can be broken depending on an input gray level.

Furthermore, there is a problem that luminance is not uniform between adjacent pixels, resulting in breaking of luminance uniformity and occurrence of flicker.

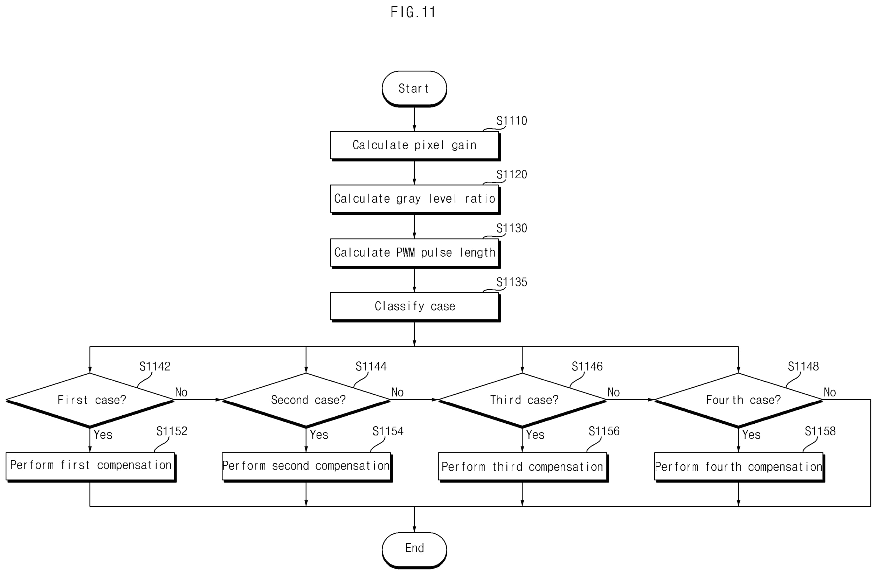

Therefore, in the present disclosure, a method is adopted to maintain the luminance uniformity between pixels. This will be described in detail with reference to FIG. 11 and the following.

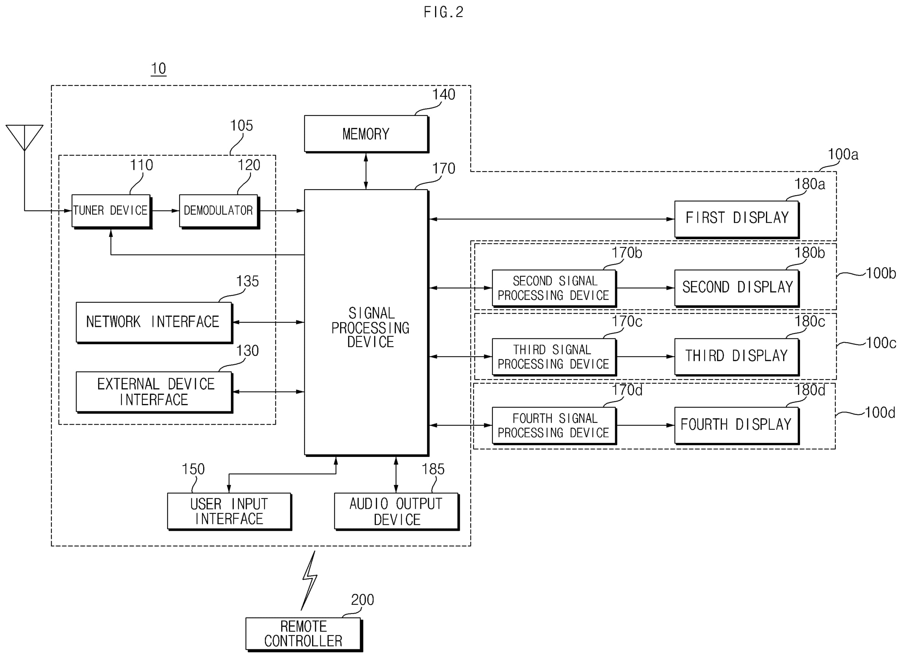

FIG. 2 is an example of an internal block diagram of a video wall of FIG. 1.

Referring to the drawing, the video wall 10 can comprise a first to fourth image display apparatuses 100a to 100d.

In the drawing, an example is illustrated in which the second to fourth image display apparatuses 100b to 100d have second to fourth displays 180b to 180d, respectively, or a second to fourth signal processing devices 170b to 170d, respectively, but can comprise an external device interface, a network interface, a memory, an image divider, a power supply, an audio output device 185, etc., unlike the drawing.

Meanwhile, the first image display apparatus 100a can comprise an external device interface 130, a network interface 135, a memory 140, a user input interface 150, a signal processing device 170, a first display device 180a, a power supply 190, an audio output device 185, and the like.

The external device interface 130 can serve to transmit or receive data to or from an external device (not shown) connected thereto. The external device interface 130 can comprise an A/V input/output (I/O) device (not shown) or a data input/output module (not shown).

For example, the external device interface 130 can comprise an HDMI port, an RGB port, a component port, a USB port, a micro SD port, etc.

The network interface 135 serves as an interface between the image video wall 100 and a wired/wireless network such as the Internet. For example, the network interface 135 can receive content or data provided by an Internet or content provider or a network operator over a network.

The memory 140 can store various programs necessary for the signal processing device 170 to process and control signals, and can also store processed video, audio and data signals.

Further, the memory 140 can temporarily store a video, audio and/or data signal received from the external device interface 130.

Meanwhile, the plurality of displays 180a to 180d can be contiguously arranged, can comprise various display panels such as LCDs, OLEDs, PDPs, etc., and can display predetermined images through the display panels.

The user input interface 150 transmits a signal input by the user to the signal processing device 170 or transmits a signal received from the signal processing device 170 to the user.

To this end, the user input interface 150 can comprise a local key comprising a power key, a touch panel for inputting user information, etc.

The signal processing device 170 can be configured to divide an input image stored in the memory 140 or an input image received from an external device through the external device interface 130 or the network interface 135 into a plurality of images, for displaying the input image through the plurality of displays 180a to 180d.

For example, the signal processing device 170 can crop the input image into a plurality of images and scale the images.

In particular, the signal processing device 170 can perform cropping and scaling in consideration of the resolution and size of the plurality of displays 180a to 180d.

Meanwhile, the signal processing device 170 can perform overall control of the video wall 10, and, more particularly, control operation of the units of the video wall 10.

Meanwhile, the signal processing device 170 can distribute images and send the distributed images to the plurality of signal processing devices 170 to 170d.

Meanwhile, at least one signal processing device can be provided in order to control the plurality of displays 180a to 180d.

Meanwhile, in the drawing, the plurality of signal processing devices 170 to 170d corresponding to the plurality of displays 180a to 180d is shown, in order to control the plurality of displays 180a to 180d.

The plurality of signal processing devices 170 to 170d can perform control operation for image display through the plurality of displays 180a to 180d.

The plurality of signal processing devices 170 to 170d can process an input image signal and send the processed image signal to the plurality of displays 180a to 180d, respectively.

That is, each of the plurality of signal processing devices 170 to 170d can be configured to control the plurality of displays 180a to 180d to output a predetermined image. More specifically, RGB signals corresponding to a video image to be displayed can be output through the plurality of displays 180a to 180d. Thus, the plurality of displays 180a to 180d can display respective images.

The power supply 190 can receive external or internal power and supply power necessary for operation of the components.

The power supply 190 supplies power to the image video wall 100 and, more particularly, the plurality of signal processing devices 170 to 170d implemented in the form of a system on chip (SOC), the plurality of displays 180a to 180d for displaying video, and the audio output device 185 for outputting audio.

A temperature sensor (not shown) can sense the temperature of the video wall 10.

The temperature sensed by the temperature sensor (not shown) can be inputted to at least one of the plurality of signal processing devices 170 to 170d, and at least one of the plurality of signal processing devices 170 to 170d can be configured to control operation of a fan driver (not shown) in order to reduce internal heat based on the sensed temperature.

Meanwhile, the image display apparatus 100a according to an embodiment of the present disclosure can include an image receiver 105, a memory 140, a user input interface 150, a sensor part (not shown), a signal processing device 170, a display device 180, and an audio output device 185.

The image receiver 105 can comprise a tuner 110, a demodulator 120, a network interface 135, and an external device interface 130.

Meanwhile, unlike the drawing, the image receiver 105 can comprise only the tuner 110, the demodulator 120, and the external device interface 130. That is, the network interface 135 can not be comprised.

The tuner 110 selects an RF broadcast signal corresponding to a channel selected by a user or all pre-stored channels among radio frequency (RF) broadcast signals received through an antenna (not shown). In addition, the selected RF broadcast signal is converted into an intermediate frequency signal, a baseband image, or an audio signal.

For example, if the selected RF broadcast signal is a digital broadcast signal, it is converted into a digital IF signal (DIF). If the selected RF broadcast signal is an analog broadcast signal, it is converted into an analog baseband image or audio signal (CVBS/ SIF). That is, the tuner 110 can process a digital broadcast signal or an analog broadcast signal. The analog baseband image or audio signal (CVBS/SIF) output from the tuner 110 can be directly input to the signal processing device 170.

Meanwhile, the tuner 110 can comprise a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 can perform demodulation and channel decoding and then output a stream signal TS. At this time, the stream signal can be a demultiplexed signal of an image signal, an audio signal, or a data signal.

The stream signal output from the demodulator 120 can be input to the signal processing device 170. The signal processing device 170 performs demultiplexing, image/audio signal processing, and the like, and then outputs an image to the display device 180 and outputs audio to the audio output device 185.

The external device interface 130 can transmit or receive data with a connected external apparatus (not shown), e.g., a set-top box 50. To this end, the external device interface 130 can comprise an A/V input and output device (not shown).

The external device interface 130 can be connected in wired or wirelessly to an external apparatus such as a digital versatile disk (DVD), a Blu ray, a game equipment, a camera, a camcorder, a computer (note book), and a set-top box, and can perform an input/output operation with an external apparatus.

The A/V input and output device can receive image and audio signals from an external apparatus. Meanwhile, a wireless communication device (not shown) can perform short-range wireless communication with other electronic apparatus.

Through the wireless communication device (not shown), the external device interface 130 can exchange data with an adjacent mobile terminal (not shown). In particular, in a mirroring mode, the external device interface 130 can receive device information, executed application information, application image, and the like from the mobile terminal (not shown).

The network interface 135 provides an interface for connecting the image display apparatus 100 to a wired/wireless network comprising the Internet network. For example, the network interface 135 can receive, via the network, content or data provided by the Internet, a content provider, or a network operator.

Meanwhile, the network interface 135 can comprise a wireless communication device (not shown).

The memory 140 can store a program for each signal processing and control in the signal processing device 170, and can store a signal-processed image, audio, or data signal.

In addition, the memory 140 can serve to temporarily store image, audio, or data signal input to the external device interface 130. In addition, the memory 140 can store information on a certain broadcast channel through a channel memory function such as a channel map.

Although FIG. 2 illustrates that the memory 140 is provided separately from the signal processing device 170, the scope of the present disclosure is not limited thereto. The memory 140 can be comprised in the signal processing device 170.

The user input interface 150 transmits a signal input by the user to the signal processing device 170 or transmits a signal from the signal processing device 170 to the user.

For example, it can transmit/receive a user input signal such as power on/off, channel selection, screen setting, etc., from a remote controller 200, can transfer a user input signal input from a local key (not shown) such as a power key, a channel key, a volume key, a set value, etc., to the signal processing device 170, can transfer a user input signal input from a sensor device (not shown) that senses a user's gesture to the signal processing device 170, or can transmit a signal from the signal processing device 170 to the sensor device (not shown).

The signal processing device 170 can demultiplex the input stream through the tuner 110, the demodulator 120, the network interface 135, or the external device interface 130, or process the demultiplexed signals to generate and output a signal for image or audio output.

For example, the signal processing device 170 receives a broadcast signal received by the image receiver 105 or an HDMI signal, and perform signal processing based on the received broadcast signal or the HDMI signal to thereby output a signal-processed image signal.

The image signal processed by the signal processing device 170 is input to the display device 180, and can be displayed as an image corresponding to the image signal. In addition, the image signal processed by the signal processing device 170 can be input to the external output apparatus through the external device interface 130.

The audio signal processed by the signal processing device 170 can be output to the audio output device 185 as an audio signal. In addition, audio signal processed by the signal processing device 170 can be input to the external output apparatus through the external device interface 130.

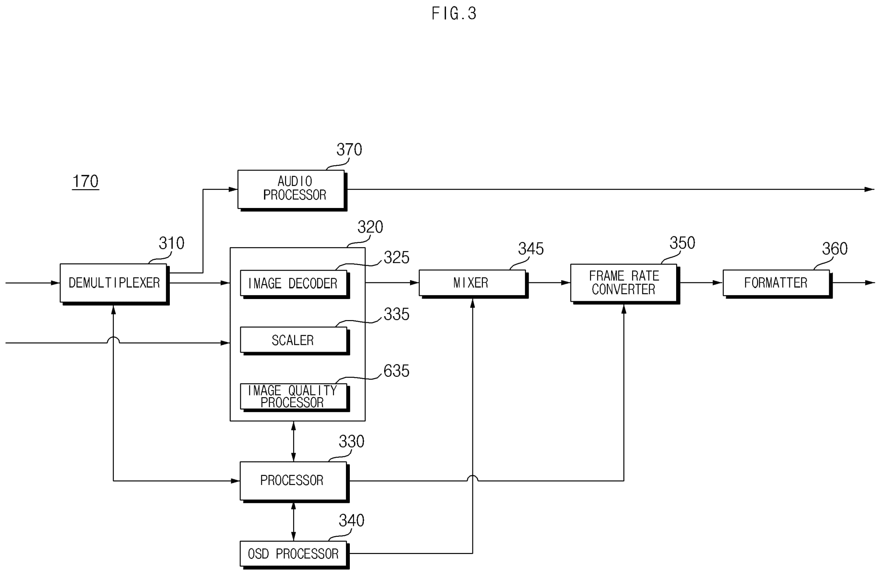

Although not shown in FIG. 2, the signal processing device 170 can comprise a demultiplexer, an image processor, and the like. That is, the signal processing device 170 can perform a variety of signal processing and thus it can be implemented in the form of a system on chip (SOC). This will be described later with reference to FIG. 3.

In addition, the signal processing device 170 can control the overall operation of the image display apparatus 100. For example, the signal processing device 170 can be configured to control the tuner 110 to control the tuning of the RF broadcast corresponding to the channel selected by the user or the previously stored channel.

In addition, the signal processing device 170 can be configured to control the image display apparatus 100 according to a user command input through the user input interface 150 or an internal program.

Meanwhile, the signal processing device 170 can be configured to control the display device 180 to display an image. At this time, the image displayed on the display device 180 can be a still image or a moving image, and can be a 2D image or a 3D image.

Meanwhile, the signal processing device 170 can display a certain object in an image displayed on the display device 180. For example, the object can be at least one of a connected web screen (newspaper, magazine, etc.), an electronic program guide (EPG), various menus, a widget, an icon, a still image, a moving image, and a text.

Meanwhile, the signal processing device 170 can recognize the position of the user based on the image photographed by a photographing device (not shown). For example, the distance (z-axis coordinate) between a user and the image display apparatus 100 can be determined. In addition, the x-axis coordinate and the y-axis coordinate in the display device 180 corresponding to a user position can be determined.

The display device 180 generates a driving signal by converting an image signal, a data signal, an OSD signal, a control signal processed by the signal processing device 170, an image signal, a data signal, a control signal, and the like received from the external device interface 130.

Meanwhile, the display device 180 can be configured as a touch screen and used as an input device in addition to an output device.

The audio output device 185 receives a signal processed by the signal processing device 170 and outputs it as an audio.

The photographing device (not shown) photographs a user. The photographing device (not shown) can be implemented by a single camera, but the present disclosure is not limited thereto and can be implemented by a plurality of cameras. Image information photographed by the photographing device (not shown) can be input to the signal processing device 170.

The signal processing device 170 can sense a gesture of the user based on each of the images photographed by the photographing device (not shown), the signals detected from the sensor device (not shown), or a combination thereof.

The power supply 190 supplies corresponding power to the image display apparatus 100. Particularly, the power can be supplied to a signal processing device 170 which can be implemented in the form of a system on chip (SOC), a display device 180 for displaying an image, and an audio output device 185 for outputting an audio.

Specifically, the power supply 190 can comprise a converter for converting an AC power into a DC power, and a DC/DC converter for converting the level of the DC power.

The remote controller 200 transmits the user input to the user input interface 150. To this end, the remote controller 200 can use Bluetooth, a radio frequency (RF) communication, an infrared (IR) communication, an Ultra Wideband (UWB), ZigBee, or the like. In addition, the remote controller 200 can receive the image, audio, or data signal output from the user input interface 150, and display it on the remote controller 200 or output it as an audio.

Meanwhile, the image display apparatus 100 can be a fixed or mobile digital broadcasting receiver capable of receiving digital broadcasting.

Meanwhile, a block diagram of the image display apparatus 100 shown in FIG. 2 is a block diagram for an embodiment of the present disclosure. Each component of the block diagram can be integrated, added, or omitted according to a specification of the image display apparatus 100 actually implemented. That is, two or more components can be combined into a single component as needed, or a single component can be divided into two or more components. The function performed in each block is described for the purpose of illustrating embodiments of the present disclosure, and specific operation and apparatus do not limit the scope of the present disclosure.

FIG. 3 is an example of an internal block diagram of a signal processing device of FIG. 2.

Referring to the drawing, the signal processing device 170 according to an embodiment of the present disclosure can comprise a demultiplexer 310, an image processor 320, a processor 330, and an audio processor 370. In addition, the signal processing device 170 can further comprise and a data processor (not shown).

The demultiplexer 310 demultiplexes the input stream. For example, when an MPEG-2 TS is input, it can be demultiplexed into image, audio, and data signal, respectively. Here, the stream signal input to the demultiplexer 310 can be a stream signal output from the tuner 110, the demodulator 120, or the external device interface 130.

The image processor 320 can perform signal processing on an input image. For example, the image processor 320 can perform image processing on an image signal demultiplexed by the demultiplexer 310.

To this end, the image processor 320 can comprise an image decoder 325, a scaler 335, an image quality processor 635, an image encoder (not shown), an OSD processor 340, a frame rate converter 350, a formatter 360, etc.

The image decoder 325 decodes a demultiplexed image signal, and the scaler 335 performs scaling so that the resolution of the decoded image signal can be output from the display device 180.

The image decoder 325 can comprise a decoder of various standards. For example, a 3D image decoder for MPEG-2, H.264 decoder, a color image, and a depth image, and a decoder for a plurality of view image can be provided.

The scaler 335 can scale an input image signal decoded by the image decoder 325 or the like.

For example, if the size or resolution of an input image signal is small, the scaler 335 can upscale the input image signal, and, if the size or resolution of the input image signal is great, the scaler 335 can downscale the input image signal.

The image quality processor 635 can perform image quality processing on an input image signal decoded by the image decoder 325 or the like.

For example, the image quality processor 635 can perform noise reduction processing on an input image signal, extend a resolution of high gray level of the input image signal, perform image resolution enhancement, perform high dynamic range (HDR)-based signal processing, change a video frame rate, or perform image quality processing appropriate for properties of a panel, especially a light emitting diode panel, etc.

The OSD processor 340 generates an OSD signal according to a user input or by itself. For example, based on a user input signal, the OSD processor 340 can generate a signal for displaying various information as a graphic or a text on the screen of the display device 180. The generated OSD signal can comprise various data such as a user interface screen of the image display apparatus 100, various menu screens, a widget, and an icon. In addition, the generated OSD signal can comprise a 2D object or a 3D object.

In addition, the OSD processor 340 can generate a pointer that can be displayed on the display, based on a pointing signal input from the remote controller 200. In particular, such a pointer can be generated by a pointing controller, and the OSD processor 240 can comprise the pointing controller (not shown). Obviously, the pointing controller (not shown) can be provided separately from the OSD processor 240.

The Frame Rate Converter (FRC) 350 can convert a frame rate of the input image. The frame rate converter 350 can output the image as it is without separate frame rate conversion.

Meanwhile, the formatter 360 can change a format of an input image signal into a format suitable for displaying the image signal on a display and output the image signal in the changed format.

In particular, the formatter 360 can change a format of an image signal to correspond to a display panel.

The processor 330 can be configured to control overall operations of the image display apparatus 100 or the signal processing device 170.

For example, the processor 330 can be configured to control the tuner 110 to control the tuning of an RF broadcast corresponding to a channel selected by a user or a previously stored channel.

In addition, the processor 330 can be configured to control the image display apparatus 100 according to a user command input through the user input interface 150 or an internal program.

In addition, the processor 330 can transmit data to the network interface 135 or to the external device interface 130.

In addition, the processor 330 can be configured to control the demultiplexer 310, the image processor 320, and the like in the signal processing device 170.

Meanwhile, the audio processor 370 in the signal processing device 170 can perform the audio processing of the demultiplexed audio signal. To this end, the audio processor 370 can comprise various decoders.

In addition, the audio processor 370 in the signal processing device 170 can process a base, a treble, a volume control, and the like.

The data processor (not shown) in the signal processing device 170 can perform data processing of the demultiplexed data signal. For example, when the demultiplexed data signal is a coded data signal, it can be decoded. The encoded data signal can be electronic program guide information comprising broadcast information such as a start time and an end time of a broadcast program broadcasted on each channel.

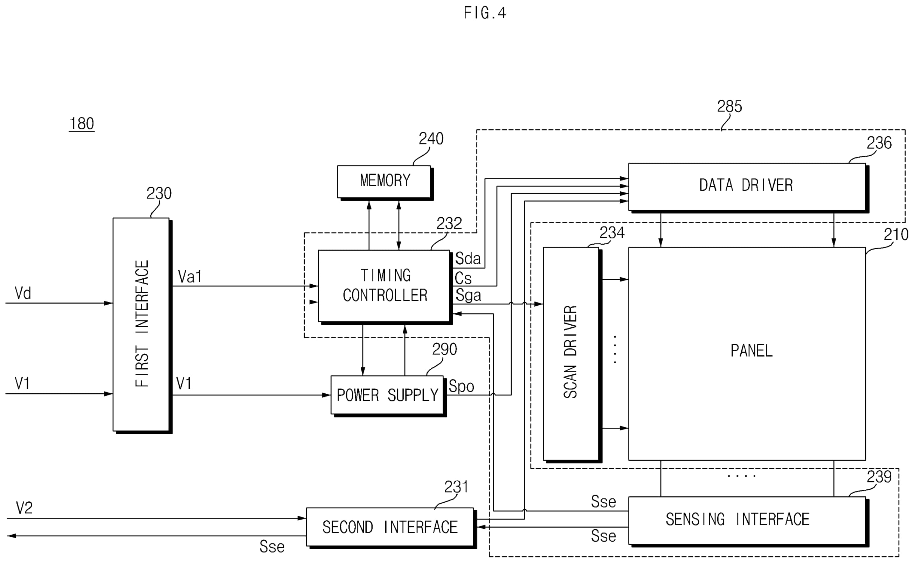

Meanwhile, a block diagram of the signal processing device 170 shown in FIG. 4 is a block diagram for an embodiment of the present disclosure. Each component of the block diagram can be integrated, added, or omitted according to a specification of the signal processing device 170 actually implemented.

In particular, the frame rate converter 350 and the formatter 360 can be provided separately in addition to the image processor 320.

FIG. 4 is an internal block diagram of a display of FIG. 2.

Referring to the drawing, the light emitting diode panel-based display device 180 can include a light emitting diode panel 210, a first interface 230, a second interface 231, a timing controller 232, a gate driver 234, a data driver 236, a memory 240, a power supply 290, and the like.

The display device 180 receives an image signal Vd, a first DC power V1, and a second DC power V2, and can display a certain image based on the image signal Vd.

Meanwhile, the first interface 230 in the display device 180 can receive the image signal Vd and the first DC power V1 from the signal processing device 170.

Here, the first DC power V1 can be used for the operation of the power supply 290 and the timing controller 232 in the display device 180.

Next, the second interface 231 can receive a second DC power V2 from an external power supply 190. Meanwhile, the second DC power V2 can be input to the data driver 236 in the display device 180.

The timing controller 232 can output a data driving signal Sda and a gate driving signal Sga, based on the image signal Vd.

For example, when the first interface 230 converts the input image signal Vd and outputs the converted image signal va1, the timing controller 232 can output the data driving signal Sda and the gate driving signal Sga based on the converted image signal va1.

The timing controller 232 can further receive a control signal, a vertical synchronization signal Vsync, and the like, in addition to the image signal Vd from the signal processing device 170.

In addition to the image signal Vd, based on a control signal, a vertical synchronization signal Vsync, and the like, the timing controller 232 generates a gate driving signal Sga for the operation of the gate driver 234, and a data driving signal Sda for the operation of the data driver 236.

At this time, when the panel 210 comprises a RGB subpixel, the data driving signal Sda can be a data driving signal for driving of RGB subpixel.

Meanwhile, the timing controller 232 can further output a control signal Cs to the gate driver 234.

The gate driver 234 and the data driver 236 supply a scan signal and a data signal to the light emitting diode panel 210 through a gate line GL and a data line DL respectively, according to the gate driving signal Sga and the data driving signal Sda from the timing controller 232. Accordingly, the light emitting diode panel 210 displays a certain image.

Meanwhile, the light emitting diode panel 210 can include a light emitting layer. In order to display an image, a plurality of scan lines GL and data lines DL can be disposed in a matrix form in each pixel corresponding to the light emitting layer.

Meanwhile, the gate line GL can be called a scan line since a scan signal is inputted through it.

Meanwhile, the data driver 236 can output a data signal to the light emitting diode panel 210 based on a second DC power V2 from the second interface 231.

The power supply 290 can supply various power supplies to the gate driver 234, the data driver 236, the timing controller 232, and the like.

Meanwhile, in the drawing, the timing controller 232, the gate driver 234, and the data driver 236 can be implemented as a single integrated circuit IC.

Accordingly, the timing controller 232, the gate driver 234, and the data driver 236 can be called a driving controller 285.

Meanwhile, the driving controller 285 can include a buffer 238 storing frame data.

In particular, the timing controller 232 in the driving controller 285 can output a scan driving signal and a data driving signal based on the frame data stored in the buffer 238.

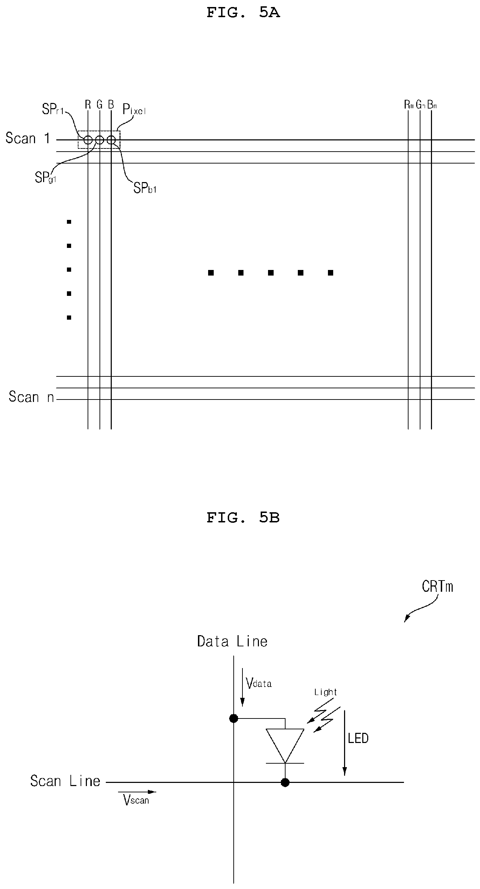

FIG. 5A to FIG. 5C are diagrams referred to in the description of a light emitting diode panel of FIG. 4.

Firstly, FIG. 5A is a diagram illustrating a pixel in the light emitting diode panel 210.

Referring to drawing, the light emitting diode panel 210 can include a plurality of scan lines Scan 1 to Scan n and a plurality of data lines R1, G1, and B1 to Rm, Gm, and Bm intersecting the scan lines.

Meanwhile, a pixel (subpixel) is defined in an intersecting area of the scan line and the data line in the light emitting diode panel 210. In the drawing, a pixel comprising sub-pixels SR1, SG1, and SB1 of RGB is shown.

Meanwhile, a red light emitting diode, a green light emitting diode, and a blue light emitting diode are disposed in the subpixels SR1, SG1, and SB1 of RGB.

FIG. 5B illustrates a circuit of any one sub-pixel in the pixel of the light emitting diode panel of FIG. 5A.

Referring to the drawing, a light emitting sub pixel circuit (CRTm) can be passive type, and can include a light emitting diode LED alone without a switching element.

As shown in the drawing, an anode of the light emitting diode LED can be connected to a data line through which a data signal Vdata is inputted, and a cathode of the light emitting diode LED can be connected to a scan line through which a scan signal Vscan is inputted.

Meanwhile, the light emitting diode can emit light or not, based on a plurality of subframes based on the passive matrix scheme.

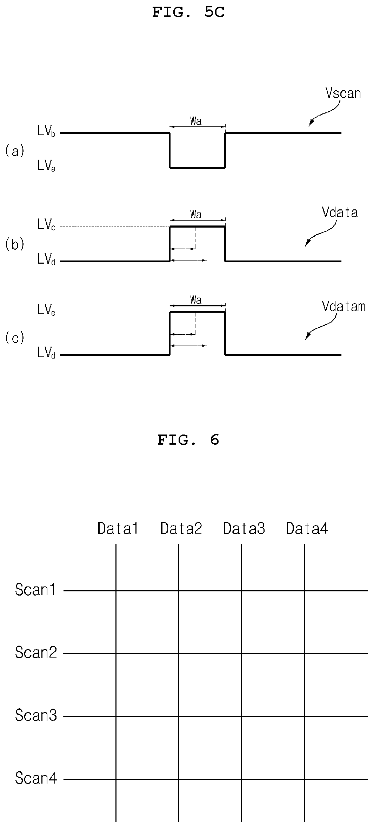

FIG. 5C is a diagram showing an example of a scan signal and data signals.

Referring to the drawing, a scan signal Vscan applied to a red light emitting diode, a green light emitting diode, and a blue light emitting diode maintains LVb level and then drops to LVa level at a scan timing.

In this case, the width of the scan signal Vscan can be set to Wa.

Meanwhile, the red light emitting diode can have higher luminance efficiency than the green light emitting diode and the blue light emitting diode because of the device characteristics.

In response to this, the driving controller 285 can be configured to control the level of a data signal supplied to the red light emitting diode to be less than the level of a data signal supplied to the green light emitting diode or the blue light emitting diode.

(b) of FIG. 5C illustrates a data signal Vdata which maintains LVd level and rises to LVc level, in response to a scan timing of the scan signal Vscan.

(c) of FIG. 5C illustrates a data signal Vdatam which maintains LVd level and rises to LVe level greater than LVc level, in response to a scan timing of the scan signal Vscan.

The data signal Vdata of LVc level can be applied to the red light emitting diode, and the data signal Vdatam of LVe level greater than LVc level can be applied to the green light emitting diode or the blue light emitting diode.

Accordingly, a data signal corresponding to a light emitting diode can be outputted, and furthermore uniform colors can be rendered.

Meanwhile, the data signal Vdatda in (b) of FIG. 5C or the data signal Vdatam in (c) of FIG. 5C are data signal based on pulse width modulations, and the luminance of the light emitting diodes varies with variations in duty corresponding to pulse width.

FIG. 6 is a diagram illustrating an example of the light emitting diode panel of FIG. 4.

Referring to the drawing, the light emitting diode panel 210 can include a plurality of data lines and a plurality of scan lines.

In FIG. 6, as an example of the light emitting diode panel 210, four data lines Data1 to Data4 and four scan lines Scan1 to Scan4 are illustrated for convenience of explanation.

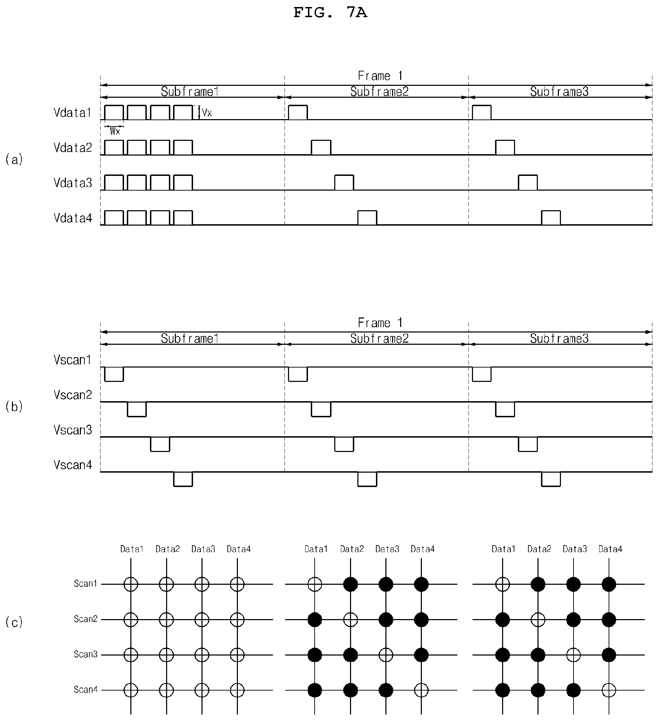

FIGS. 7A to 8C are diagrams referred to in the description of an operation of an image display apparatus related to the present disclosure.

FIG. 7A illustrates an example of a data signal applied when a frame has a first gray level, during a plurality of subframe periods within a frame period.

Referring to the drawings, a plurality of subframe periods Subframes 1 to 3 can be included within a frame period Frame 1.

Although the drawing illustrates a plurality of subframe periods Subframes 1 to 3 within a frame period Frame 1 for convenience of explanation, many variations can be made.

(a) of FIG. 7A illustrates that data signals Vdata 1 to 4 are respectively applied to the four data lines shown in FIG. 6 during the first subframe period Subframe 1 which is one of the plurality of subframe periods Subframes 1 to 3.

In the drawing, data signals Vdata 1 to 4 each having four pulses or voltages Vx are respectively applied to four data lines during the first subframe period Subframe 1.

In this case, the pulse width of the data signals Vdata 1 to 4 can be Wx.

(b) of FIG. 7A illustrates that scan signals Vscan 1 to 4 are sequentially applied to four scan data lines during the first subframe period Subframe 1.

Accordingly, as shown in (c) of FIG. 7A, sixteen light emitting diodes emit light during the first subframe period Subframe 1.

(a) of FIG. 7A illustrates that data signals Vdata 1 to 4 are respectively applied to the four data lines shown in FIG. 6 during the second subframe period Subframe 2.

In the drawing, data signals Vdata 1 to 4 each having one pulse or voltage Vx are respectively applied to four data lines during the second subframe period Subframe 2.

(b) of FIG. 7A illustrates that scan signals Vscan 1 to 4 are sequentially applied to four scan lines during the second subframe period Subframe 2.

Accordingly, as shown in (c) of FIG. 7A, four light emitting diodes in a diagonal orientation emit light during the second subframe period Subframe 2.

(a) of FIG. 7A illustrates that data signals Vdata 1 to 4 are respectively applied to the four data lines shown in FIG. 6 during the third subframe period Subframe 3.

In the drawing, data signals Vdata 1 to 4 each having one pulse or voltage Vx are respectively applied to four data lines during the third subframe period Subframe 3.

(b) of FIG. 7A illustrates that scan signals Vscan 1 to 4 are sequentially applied to four scan lines during the third subframe period Subframe 3.

Accordingly, as shown in (c) of FIG. 7A, four light emitting diodes in a diagonal orientation emit light during the third subframe period Subframe 3.

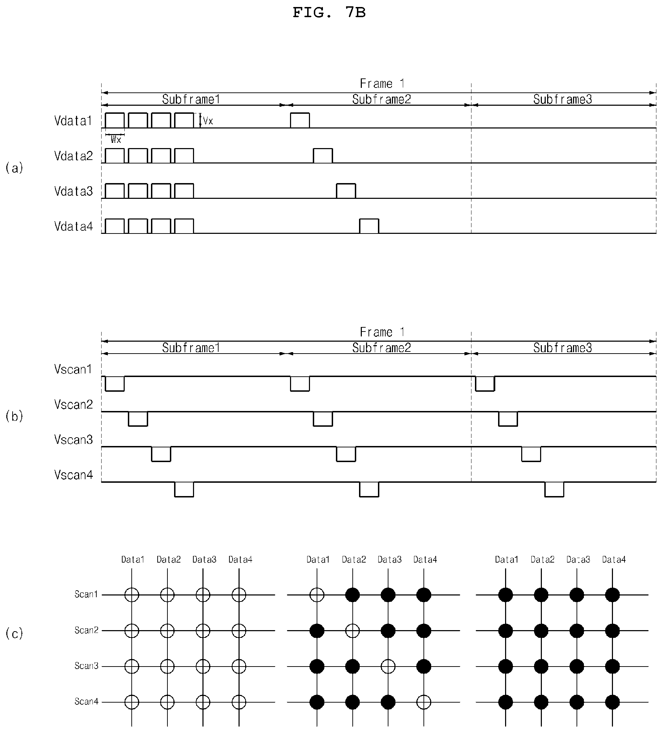

FIG. 7B illustrates an example of a data signal applied when a frame has a second gray level less than the first gray level, during a plurality of subframe periods within a frame period.

(a) of FIG. 7B illustrates that data signals Vdata 1 to 4 are applied to four data lines illustrated in FIG. 6, respectively during a first subframe period Subframe 1 among the plurality of subframe periods Subframes 1 to 3.

In the drawing, data signals Vdata 1 to 4 are illustrated, which have four pulses or voltages Vx in four data lines, respectively during the Suframe 1 period.

In this case, pulse widths of the data signals Vdata 1 to 4 can be Wx.

(b) of FIG. 7B illustrates that scan signals Vscan 1 to 4 are sequentially applied to four scan lines during the plurality of subframe periods Subframes 1 to 3.

Accordingly, during the first subframe period Subframe 1, 16 light emitting diodes are emitted as illustrated in (c) of FIG. 7B.

Meanwhile, (a) of FIG. 7B illustrates that data signals Vdata 1 to 4 having one pulse or voltage Vx are applied to four data lines illustrated in FIG. 6, respectively during a second subframe period Subframe 2 among the plurality of subframe periods Subframes 1 to 3, and the pulse or voltage Vx is not applied during a third subframe period Subframe 3.

Accordingly, during the second subframe period Subframe 2, 4 light emitting diodes in a diagonal direction are emitted as illustrated in (c) of FIG. 7B, and during the third subframe period Subframe 3, 16 light emitting diodes are all turned off, and not emitted.

As illustrated in FIG. 7B, when the plurality of light emitting diodes is turned off and not emitted during some periods among a plurality of subframes Subframes 1 to 3, a flicker phenomenon can occur.

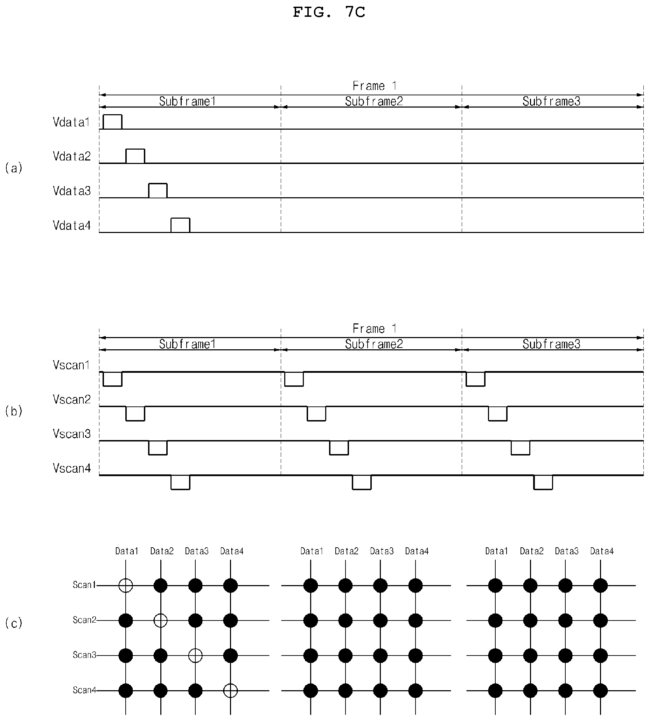

FIG. 7C illustrates an example of a data signal applied in response to a case in which a frame gray level is a third gray level less than a second gray level during a plurality of subframe periods within a frame period.

(a) of FIG. 7C illustrates that data signals Vdata 1 to 4 having one pulse or voltage Vx are applied to four data lines illustrated in FIG. 6, respectively during a first subframe period Subframe 1 among the plurality of subframe periods Subframes 1 to 3, and the pulse or voltage Vx is not applied during the second subframe period Subframe 2 and the third subframe period Subframe 3.

(a) of FIG. 7C illustrates that scan signals Vscan 1 to 4 are sequentially applied to 4 scan lines, respectively during the plurality of subframe periods Subframes 1 to 3.

Accordingly, during the first subframe period Subframe 1, 4 light emitting diodes in the diagonal direction are emitted as illustrated in (c) of FIG. 7C, and during the second subframe period Subframe 2 and the third subframe period Subframe 3, 16 light emitting diodes are all turned off, and not emitted.

As illustrated in FIG. 7C, when the plurality of light emitting diodes is turned off and not emitted during some periods among a plurality of subframes Subframes 1 to 3, the flicker phenomenon can occur.

In particular, compared to FIG. 7B, in the case of FIG. 7C, since a diode non-emission period becomes longer, a flicker occurrence possibility increases.

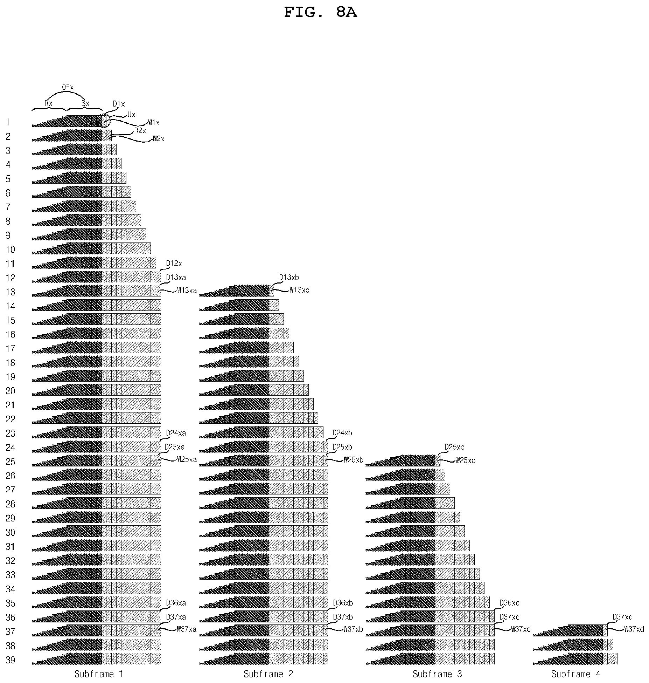

FIG. 8A illustrates an example of a subframe driving scheme according to the present disclosure.

Referring to the drawing, input gray level can vary stepwise from 1 to 39.

In order to express the input gray level, a data signal is output during a plurality of subframe periods according to a passive matrix driving scheme.

In response to the input gray level being 1, the driving controller 285 can output a first data signal D1x including an offset signal OFx and a first weighting signal W1x during a first subframe period Subframe 1.

Meanwhile, the offset signal OFx can include a plurality of step-up signals Rx and a plurality of sustain signals Sx.

In this case, the plurality of step-up signals Rx can include seven step-up signals that increase stepwise, and the plurality of sustain signals Sx can include seven base weighting signals Ux of a certain level.

Meanwhile, the first weighting signal W1x can include one base weighting signal Ux.

That is, the first data signal D1x can include seven step-up signals that increase stepwise, and eight base weighting signals Ux.

Meanwhile, in response to the input gray level being 2, the driving controller 285 can output a second data signal D2x including the offset signal OFx and a second weighting signal W2x during the first subframe period Subframe 1.

That is, the second data signal D2x can further include one base weighting signal Ux rather than the first data signal D1x.

Meanwhile, in response to the input gray level being 12, the driving controller 285 can output a second data signal D2x including the offset signal OFx and a twelfth weighting signal W12x during the first subframe period Subframe 1.

The twelfth weighting signal W12x in this case can include twelve base weighting signals Ux.

Meanwhile, in response to the input gray level being 13, the driving controller 285 can output a data signal D13xa including the offset signal OFx and the twelfth weighting signal W12x during the first subframe period Subframe 1, and output a data signal D13xb including the offset signal OFx and one base weighting signal Ux during a second subframe period Subframe 2.

Comparing a case in which the input gray level is 24 and a case in which the input gray level is 13, a data signal D13xb including the offset signal OFx and one base weighting signal Ux is further output.

Meanwhile, in response to the input gray level being 24, the driving controller 285 can output a data signal D24xa including the offset signal OFx and the twelfth weighting signal W12x during the first subframe period Subframe 1, and output a data signal D24xb including the offset signal OFx and the twelfth weighting signal W12x during the second subframe period Subframe 2.

Meanwhile, in response to the input gray level being 25, the driving controller 285 can output a data signal D25xa including the offset signal OFx and the twelfth weighting signal W12x during the first subframe period Subframe 1, output a data signal D25xb including the offset signal OFx and the twelfth weighting signal W12x during the second subframe period Subframe 2, and output a data signal D25xc including the offset signal OFx and one base weighting signal Ux during a third subframe period Subframe 3.

Comparing the case where the input gray level is 24 and the case where the input gray level is 25, the data signal D25xc including the offset signal OFx and one base weighting signal Ux is further output.

Meanwhile, in response to the input gray level being 36, the driving controller 285 can output a data signal D36xa including the offset signal OFx and the twelfth weighting signal W12x during the first subframe period Subframe 1, output a data signal D36xb including the offset signal OFx and the twelfth weighting signal W12x during the second subframe period Subframe 2, and output a data signal D36xc including the offset signal OFx and the twelfth weighting signal W12x during the third subframe period Subframe 3.

Meanwhile, in response to the input gray level being 37, the driving controller 285 can output a data signal D37xa including the offset signal OFx and the twelfth weighting signal W12x during the first subframe period Subframe 1, output a data signal D37xb including the offset signal OFx and the twelfth weighting signal W12x during the second subframe period Subframe 2, output a data signal D37xc including the offset signal OFx and the twelfth weighting signal W12x during the third subframe period Subframe 3, and output a data signal D37xd including the offset signal OFx and one base weighting signal Ux during a fourth subframe period Subframe 4.

Comparing the case where the input gray level is 36 and the case where the input gray level is 37, the data signal D37xb including the offset signal OFx and one base weighting signal Ux is further output.

According to the scheme of FIG. 8A, each time the number of subframes increases, a data signal corresponding to the offset signal OFx and one base weighting signal Ux is further applied.

For example, when the luminance by the offset signal OFx is approximately 0.5 nits and the luminance of one base weighting signal Ux is 0.04 nits, a change of 0.54 nits occurs instead of a change of 0.04 nits every time the number of subframes is changed. Accordingly, there is a problem in that the linearity of the luminance according to the gray level is significantly broken.

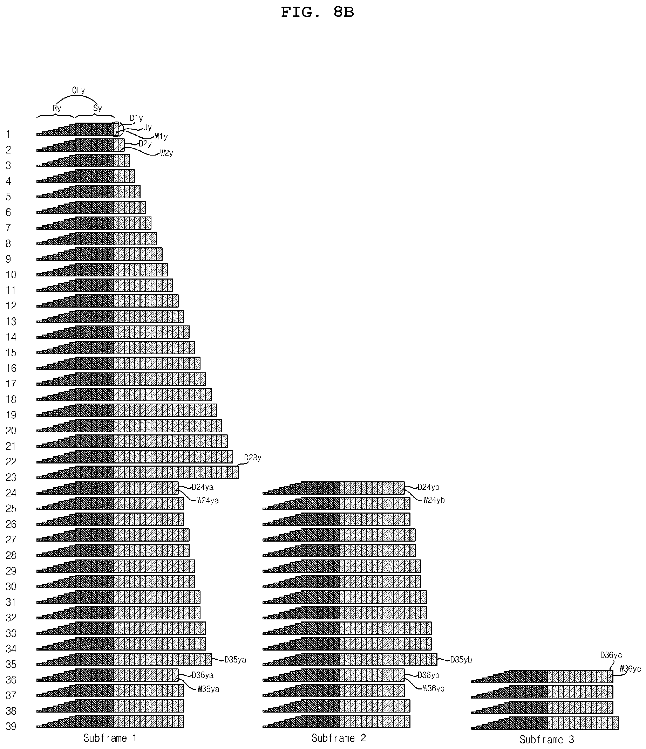

FIG. 8B illustrates another example of the subframe driving scheme related to the present disclosure.

Referring to the drawing, input gray level can vary stepwise from 1 to 39.

In order to express the input gray level, the data signal is output during the plurality of subframe periods according to the passive matrix driving scheme.

In response to the input gray level being 1, the driving controller 285 can output a first data signal D1y including an offset signal OFy and a first weighting signal W1y during the first subframe period Subframe 1.

Meanwhile, the offset signal OFy can include a plurality of step-up signals Ry and a plurality of sustain signals Sy.

In this case, the plurality of step-up signals Ry can include seven step-up signals that increase stepwise, and the plurality of sustain signals Sy can include seven base weighting signals Uy of a certain level.

Meanwhile, the first weighting signal W1y can include one base weighting signal Uy.

That is, the first data signal D1y can include seven step-up signals that increase stepwise, and eight base weighting signals Uy.

Meanwhile, in response to the input gray level being 2, the driving controller 285 can output a second data signal D2y including the offset signal OFy and a second weighting signal W2y during the first subframe period Subframe 1.

That is, the second data signal D2y can further include one base weighting signal Ux than the first data signal D1y.

Meanwhile, in response to the input gray level being 23, the driving controller 285 can output a 23rd data signal D23y including the offset signal OFy and a 23rd weighting signal W23y during the first subframe period Subframe 1.

The 23rd weighting signal W23y in this case can include 23 base weighting signals Uy.

Meanwhile, in response to the input gray level being 24, the driving controller 285 can output a data signal D24ya including the offset signal OFy and the twelfth weighting signal W12y during the first subframe period Subframe 1, and output a data signal D24xb including the offset signal OFy and the twelfth weighting signal W12y during the second subframe period Subframe 2.

The twelfth weighting signal W12y in this case can include 12 base weighting signals Uy.

Comparing the case where the input gray level is 23 and the case where the input gray level is 24, the offset signal OFy and one base weighting signal Uy are further output.

Meanwhile, in response to the input gray level being 25, the driving controller 285 can output a data signal D25ya including the offset signal OFy and a thirteenth weighting signal W13y during the first subframe period Subframe 1, and output a data signal D25yb including the offset signal OFy and the twelfth weighting signal W12y during the second subframe period Subframe 2.

Meanwhile, in response to the input gray level being 25, the driving controller 285 can output a data signal D25ya including the offset signal OFy and a thirteenth weighting signal W13y during the first subframe period Subframe 1, and output a data signal D25yb including the offset signal OFy and the twelfth weighting signal W12y during the second subframe period Subframe 2.

The eighteenth weighting signal W18y in this case can include eighteen base weighting signals Uy, and the seventeenth weighting signal W17y can include seventeen base weighting signals Uy.

Meanwhile, in response to the input gray level being 36, the driving controller 285 can output a data signal D36ya including the offset signal OFy and the twelfth weighting signal W12y during the first subframe period Subframe 1, output a data signal D35yb including the offset signal OFy and the twelfth weighting signal W12y during the second subframe period Subframe 2, and output a data signal D36yc including the offset signal OFy and the twelfth weighting signal W12y during the third subframe period Subframe 3.

Comparing the case where the input gray level is 35 and the case where the input gray level is 36, the offset signal OFy and one base weighting signal Uy are further output.

According to the scheme of FIG. 8B, each time the number of subframes increases, a data signal corresponding to the offset signal OFy and one base weighting signal Uy is further applied.

For example, when the luminance by the offset signal OFy is approximately 0.5 nits and the luminance by one base weighting signal Uy is 0.04 nits, a change of 0.54 nits occurs instead of a change of 0.04 nits every time the number of subframes is changed. Accordingly, there is a problem in that the linearity of the luminance according to the gray level is significantly broken.

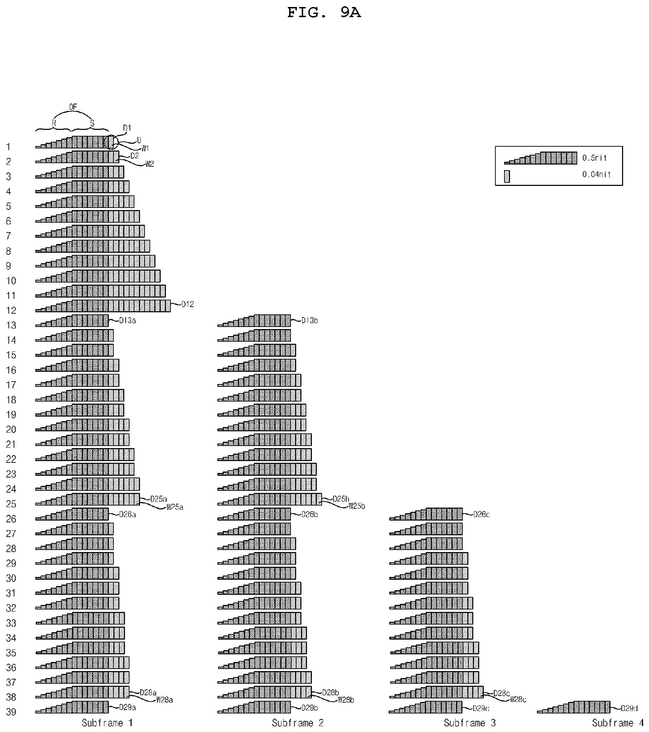

FIGS. 9A to 9C are diagrams referred to in the description of an operation of an image display apparatus according to an embodiment of the present disclosure.

FIG. 9A is a diagram illustrating an operation of an image display apparatus according to an embodiment of the present disclosure.

Referring to the drawing, FIG. 9A illustrates an example of a subframe driving scheme of the image display apparatus according to an embodiment of the present disclosure.

Referring to the drawing, the input gray level can vary stepwise from 1 to 39.

In order to express the input gray level, the data signal is output during the plurality of subframe periods according to the passive matrix driving scheme.

In response to the input gray level being 1, the driving controller 285 outputs a first data signal D1 including an offset signal OF and a first weighting signal W1 during the first subframe period Subframe 1.

Meanwhile, the offset signal OF can include a plurality of step-up signals R and a plurality of sustain signals S.

In this case, the plurality of step-up signals R can include seven step-up signals that increase stepwise, and the plurality of sustain signals S can include eight base weighting signals U of a certain level.

Meanwhile, the first weighting signal W1 can include one base weighting signal U.

That is, the first data signal D1 can include seven step-up signals that increase stepwise, and nine base weighting signals U.

Meanwhile, luminance of the offset signal OF can be approximately 0.5 nits, and luminance of the base weighting signal U can be approximately 0.04 nits. Therefore, in response to the input gray level being 1, luminance by the first data signal D1 can be approximately 0.54 nits.

Meanwhile, in response to the input gray level being 2, the driving controller 285 can output a second data signal D2 including the offset signal OF and a second weighting signal W2 during the first subframe period Subframe 1.

That is, the second data signal D2 can further include one base weighting signal U than the first data signal D1.

Therefore, in response to the input gray level being 2, luminance by the second data signal D2 can be 0.54 + 0.04, which can be approximately 0.58 nits.

Meanwhile, in response to the input gray level being 12, the driving controller 285 can output a twelfth data signal D12 including the offset signal OF and a twelfth weighting signal D12 during the first subframe period Subframe 1.

The twelfth weighting signal W12 in this case can include twelve base weighting signals U.

That is, in response to the input gray level being 12, luminance by the twelfth data signal D12 can be 0.5 + 0.04 * 12, which can be approximately 0.98 nits.

Meanwhile, in response to the input gray level being 13, the driving controller 285 can output a data signal D13a including only the offset signal OF during the first subframe period Subframe 1 and output a data signal D13b including only the offset signal OF during the second subframe period Subframe 2.

Comparing a case in which the input gray level is 13 and a case in which the input gray level is 12, the number of offset signals OF is increased to 2 by 1, but 12 base weighting signals U are omitted.

That is, in response to the input gray level being 13, luminance by a thirteenth data signal D13 including the data signal D13a during the first subframe period Subframe 1 and the data signal D13b during the second subframe period Subframe 2 is 0.5 + 0.5, which can be approximately 1.0 nit.

That is, in the case where the input gray level is 13, the luminance is increased by approximately 0.02 nits compared to the case where the input gray level is 12.

Meanwhile, in response to the input gray level being 14, the driving controller 285 can output a data signal D14a including only the offset signal OF and the first weighting signal W1 during the first subframe period Subframe 1 and output a data signal D14b including only the offset signal OF during the second subframe period Subframe 2.

Meanwhile, in response to the input gray level being 14, luminance by a fourteenth data signal D14 can be 2 * 0.5 + 0.04, which can be approximately 1.04 nits.

Meanwhile, in response to the input gray level being 15, the driving controller 285 can output a data signal D15a including the offset signal OF and the first weighting signal W1 during the first subframe period Subframe 1 and output a data signal D15b including the offset signal OF and the first weighting signal W1 during the second subframe period Subframe 2.

Meanwhile, the first weighting signal W1 can include one base weighting signal U.

Meanwhile, in response to the input gray level being 12, luminance by the twelfth data signal D12 can be 2 * 0.5 + 0.04 * 2, which can be approximately 1.08 nits.

Meanwhile, in response to the input gray level being 25, the driving controller 285 can output a data signal D25a including the offset signal OF and a sixth weighting signal W6 during the first subframe period Subframe 1 and output a data signal D25b including the offset signal OF and the sixth weighting signal W6 during the second subframe period Subframe 2.

The sixth weighting signal W6 in this case can include six base weighting signals U.

Meanwhile, in response to the input gray level being 25, luminance by a 25th data signal D25 is 2 * 0.5 + 0.04 * 12, which can be approximately 1.48 nits.

Meanwhile, in response to the input gray level being 26, the driving controller 285 can output a data signal D26a including only the offset signal OF during the first subframe period Subframe 1, output a data signal D26b including only the offset signal OF during the second subframe period Subframe 2, and output a data signal D26c including only the offset signal OF during the third subframe period Subframe 3.

Comparing the case where the input gray level is 26 and the case where the input gray level is 25, the number of offset signals OF is increased to 3 by 1, but twelve base weighting signals U are omitted.

That is, in response to the input gray level being 26, luminance by a 26th data signal D26 including a data signal D26a during the first subframe period Subframe 1, a data signal D26b during the second subframe Subframe 2, and a data signal D26c during the third subframe period Subframe 3 is 0.5 + 0.5 + 0.5, which can be approximately 1.5 nits.

That is, in the case where the input gray level is 26, the luminance is increased by approximately 0.02 nits compared to the case where the input gray level is 25.

Meanwhile, in response to the input gray level being 38, the driving controller 285 can output a data signal D38a including the offset signal OF and a fourth weighting signal W4 during the first subframe period Subframe 1, output a data signal D38b including the offset signal OF and the fourth weighting signal W4 during the second subframe period Subframe 2, and output a data signal D38c including the offset signal OF and the fourth weighting signal W4 during the third subframe period Subframe 3.

The fourth weighting signal W4 in this case can include four base weighting signals U.

Meanwhile, in response to the input gray level being 38, luminance by a 38th data signal D38 is 3 * 0.5 + 0.04 * 12, which can be approximately 1.98 nits.

Meanwhile, in response to the input gray level being 39, the driving controller 285 can output a data signal D39a including only the offset signal OF during the first subframe period Subframe 1, output a data signal D39b including only the offset signal OF during the second subframe period Subframe 2, output a data signal D39c including only the offset signal OF during the third subframe Subframe 3, and output a data signal D39d including only the offset signal OF during the fourth subframe period Subframe 4.

Comparing a case in which the input gray level is 39 and a case in which the input gray level is 38, the number of offset signals OF is increased to 4 by 1, but twelve base weighting signals U are omitted.

That is, in response to the input gray level being 39, luminance by a 39th data signal D39 including the data signal D39a during the first subframe period Subframe 1, the data signal D39b during the second subframe Subframe 2, the data signal D39c during the third subframe period Subframe 3, and a data signal D39d during the fourth subframe period Subframe 4 is 0.5 + 0.5 + 0.5 + 0.5, which can be approximately 2.0 nits.

That is, in the case where the input gray level is 39, the luminance is increased by approximately 0.02 nits as compared with the case where the input gray level is 38.

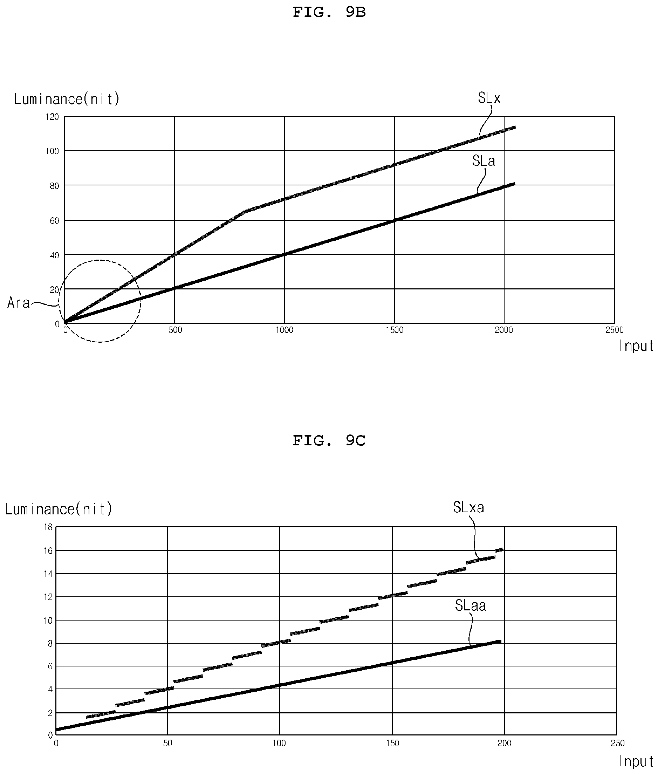

According to the scheme illustrated in FIG. 9, when the number of base weighted signals U is increased one by one and then reaches a total of twelve base weighting signals U, the addition of the base weighting signals is omitted and only the offset signal is applied while increasing the number of subframe periods. Accordingly, the linearity of the luminance according to the gray level can be maintained. In particular, flicker can be reduced while maintaining the linearity of the luminance at a low gray level.

The driving controller 285 in the image display apparatus 100 according to an embodiment of the present disclosure outputs a first data signal Dn in response to the input gray level being n, outputs a second data signal Dn+1 of which luminance increases by a first level greater than the first data signal Dn when the input gray level is n + 1, and outputs a third data signal of which luminance of a second level, which is equal to or less than the first level, is increased in response to the input gray level being n + 2 and the increase in the number of subframe periods being required. Accordingly, the linearity of the luminance according to the gray level can be maintained.

Meanwhile, the driving controller 285 can output a second data signal Dn + 1 including the offset signal OF and n + 1 base weighting signals U during the first subframe period Subframe 1 in response to the input gray level being n + 1, and output a fourth data signal including the offset signal OF during the first subframe period Subframe 1 and output the fourth data signal including the offset signal OF during the second subframe period Subframe 2 after the first subframe period Subframe 1 in response to the input gray level being n + 2 and an increase in the number of subframe periods being required.

For example, when n is 11 in the input gray level of n, the driving controller 285 can output an eleventh data signal including one offset signal OF and eleven base weighting signals U in order to express the input gray level of 11, and luminance by the eleventh data signal in this case is 0.5 + 0.04 * 11, which can be approximately 0.94 nits.

Meanwhile, when n is 11 in the input gray level of n + 1, the driving controller 285 can output a twelfth data signal including one offset signal OF and twelve base weighting signals U in order to express the input gray level of 12, and luminance by the twelfth data signal in this case is 0.5 + 0.04 * 12, which can be approximately 0.98 nits.

Meanwhile, when n is 11 in the input gray level of n + 2, the driving controller 285 outputs a thirteenth data signal including only the offset signal OF during the first subframe period Subframe 1 and only the offset signal OF during the second subframe period Subframe 2 in order to express the input gray level of 13.

Luminance by the thirteenth data signal in this case is 2 * 0.5, which can be approximately 1.0 nit.

Meanwhile, in response to the input gray level being n + 3, the driving controller 285 can output a data signal including the offset signal OF and one base weighting signal U during the first subframe period Subframe 1 and output a data signal including only the offset signal OF during the second subframe period Subframe 2 after the first subframe period Subframe 1.

For example, when n is 11 in the input gray level of n + 3, the driving controller 285 outputs a fourteenth data signal including the offset signal OF and one base weighting signal U during the first subframe period Subframe 1 and only the offset signal OF during the second subframe period Subframe 2 in order to express the input gray level of 14.

Luminance by the fourteenth data signal in this case is 2 * 0.5 + 0.04, which can be approximately 1.04 nits.

Meanwhile, the offset signal OF includes a plurality of step-up signals R and a plurality of sustain signals S, and in response to the input gray level being n + 1, the number of base weighting signals U can be greater than the number of plurality of sustain signals S.

For example, when n is 11 in the input gray level of n + 1, the driving controller 285 outputs a twelfth data signal including the offset signal OF and twelve base weighting signals U during the first subframe period Subframe 1 in order to express the input gray level of 12.

In this case, since the twelfth data signal includes the sustain signal S corresponding to nine base weighting signals U, and twelve base weighting signals U, the number of base weighting signals U can be greater than the number of plurality of sustain signals S.

Meanwhile, the offset signal OF can include a plurality of step-up signals R and a plurality of sustain signals S, and the number of sustain signals S can be greater than the number of step-up signals R.

That is, the offset signal OF can include seven step-up signals and nine base weighting signals U, and Accordingly, the number of sustain signals S can be greater than the number of step-up signals R.

Meanwhile, in response to the input gray level being n + 1 or less, the driving controller 285 can control a light emitting diode to emit light only during the first subframe period Subframe 1.

For example, when n is 11 or less, that is, in response to the input gray level being 12 or less, the driving controller 285 can control the light emitting diode to emit light only during the first subframe period Subframe 1.

Meanwhile, in response to the input gray level being m, the driving controller 285 can output a sixth data signal including the offset signal OF and a base weighting signals U during the first subframe period Subframe 1 and output a sixth data signal including the offset signal OF and a base weighting signals U during the second subframe period Subframe 2.

Meanwhile, in response to the input gray level being m + 1 and the increase in the number of subframe periods being required, the driving controller 285 can output a fourth data signal including the offset signal OF during the first subframe period Subframe 1, the second subframe period Subframe 2, and the third subframe period after the second subframe period Subframe 2.

In this case, m can be 25 and a can be 6.

That is, in response to the input gray level being m = 25, the driving controller 285 can output a data signal including the offset signal OF and six base weighting signals U during the first subframe period Subframe 1 and output a data signal including the offset signal OF and six base weighting signals U during the second subframe period Subframe 2.

Meanwhile, in response to the input gray level being m + 1 = 26 and the increase in the number of subframe periods being required, the driving controller 285 can output a data signal including only the offset signal OF during each of the first subframe period Subframe 1, the second subframe period Subframe 2, and the third subframe period after the second subframe period Subframe 2. Accordingly, the linearity of the luminance according to the gray level can be maintained.

Meanwhile, in response to the input gray level being m + 2 = 27, the driving controller 285 can output a data signal including the offset signal OF and one base weighting signal U during the first subframe period Subframe 1 and output a data signal including only the offset signal OF during the second subframe period Subframe 2 and the third subframe period. Accordingly, the linearity of the luminance according to the gray level can be maintained.

Meanwhile, the offset signal OF can include the plurality of step-up signals R and the plurality of sustain signals S, and in response to the input gray level being m = 25, the number of a (= 6) base weighting signals U can be less than the number of plurality of sustain signals S.

Meanwhile, in response to the input gray level being n + 2 and the increase in the number of subframe periods being required, the driving controller 285 can output a data signal of which luminance of a second level that is less than a first level is increased. Accordingly, the linearity of the luminance according to the gray level can be maintained.

For example, when n is 11, the input gray level is n + 2 = 13, and the increase in the number of subframe periods being required, the driving controller 285 can output a data signal of which the luminance of the second level that is less than the first level is increased.

In this case, the first level can be 0.04 nits and the second level can be 0.02 nits.

Meanwhile, the driving controller 285 can control a luminance level of the data signal to increase linearly in sequence in response to the input gray level increasing in sequence. Accordingly, the linearity of the luminance according to the gray level can be maintained.

Meanwhile, the driving controller 285 according to another embodiment of the present disclosure outputs a data signal including the offset signal OF and a weighting signal during a first number of subframe periods, and then, in response to an increase in the number of subframes being required, outputs a data signals including only the offset signal OF during a second number of subframe periods. Accordingly, the linearity of the luminance according to the gray level can be maintained.

In FIG. 9A, the driving controller 285 outputs, in response to the input gray level being 12, the data signal including the offset signal OF and the weighting signal during one subframe period, and in response to the input gray level being 13, the data signal including only the offset signal OF during two subframe periods, respectively.

Meanwhile, in FIG. 9A, the driving controller 285 outputs, in response to the input gray level being 25, the data signal including the offset signal OF and the weighting signal during two subframe periods, and in response to the input gray level being 26, the data signal including only the offset signal OF during three subframe periods, respectively.

Meanwhile, in FIG. 9A, the driving controller 285 outputs, in response to the input gray level being 38, the data signal including the offset signal OF and the weighting signal during three subframe periods, and in response to the input gray level being 39, the data signal including only the offset signal OF during four subframe periods, respectively.

FIGS. 9B and 9C are views referred to in the description of FIG. 9A.

FIG. 9B illustrates an input gray level to luminance curve SLx according to the driving scheme of FIG. 8A or 8B and an input gray level to luminance curve SLxa according to the driving scheme of FIG. 9A.

Referring to the drawing, in the input gray level to luminance curve SLxa according to an embodiment of the present disclosure, the luminance level of the data signal can increase linearly in sequence over the total gray level.

That is, the driving controller 285 according to the embodiment of the present disclosure can control the luminance level of the data signal to increase linearly in sequence in response to the input gray level increasing in sequence.

Meanwhile, according to the input gray level to luminance curve SLx according to the driving scheme of FIG. 8A or FIG. 8B, in response to the input gray level being between 500 and 1000, an interval is generated in which a luminance increase amount varies. Accordingly, according to the input gray level to luminance curve SLx according to the driving scheme of FIG. 8A or FIG. 8B, the linearity of the luminance according to the gray level can not be maintained.

FIG. 9C is an enlarged diagram of the input gray level to luminance curve SLx of FIG. 9B, and a low gray level area Ara of the input gray level to luminance curve SLxa.

Referring to the drawing, in response to the input gray level being 200 or less, according to the input gray level to luminance curve SLx according to the driving scheme of FIG. 8A or FIG. 8B, the linearity of the luminance according to the gray level is broken.

Meanwhile, according to the embodiment of the present disclosure, in the input gray level to luminance curve SLxa, even in response to the input gray level being 200 or less, the linearity of the luminance according to the gray level is maintained.

Accordingly, according to the input gray level to luminance curve SLxa according to the embodiment of the present disclosure, the flicker can be reduced while maintaining the linearity of the luminance at a low gray level.

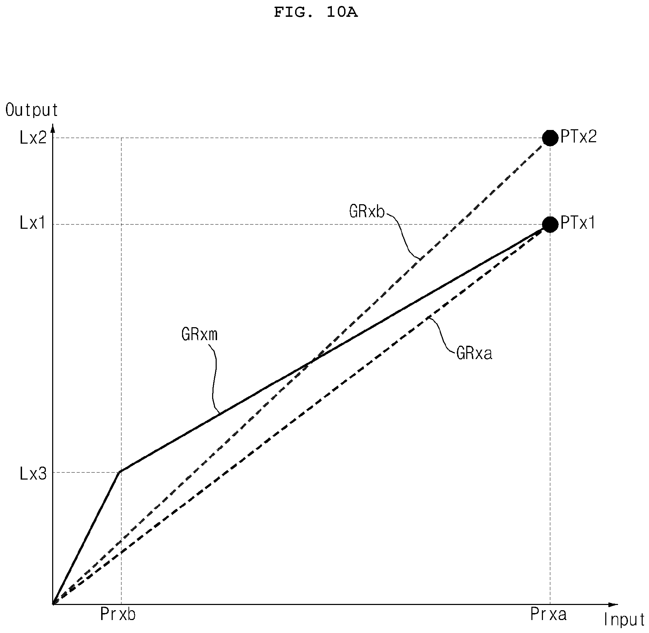

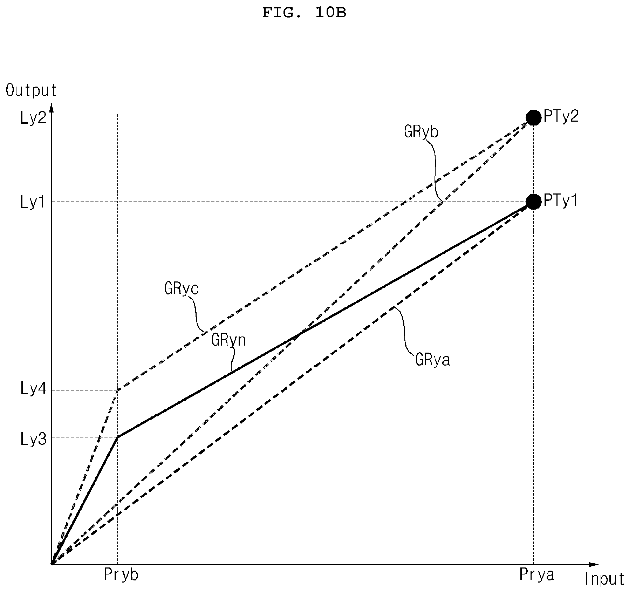

FIGS. 10A and 10B are diagrams referred to in the description of an operation of an image display apparatus related to the present disclosure.

FIG. 10A is a diagram illustrating an example of an input gray level of an image signal input into the driving controller to luminance of the light emitting diode.

Referring to the drawings, a horizontal axis can represent an input gray level of an image signal input into the driving controller, and a vertical axis can represent luminance of the light emitting diode.

In the drawing, GRxm can represent an actual luminance of the light emitting diode relative to an input gray level.

Meanwhile, in response to the input gray level of the image signal being Prxa, calibration measurement can be performed.

Meanwhile, in response to the input gray level of the image signal being Prxb, the input gray level can be assigned to each of a plurality of subframe periods. That is, in response to the input gray level being Prxb, first, the input gray level can be assigned to each of the plurality of subframe periods.

In response to the luminance of the light emitting diode at the input gray level of Prxa being Lx1, the signal processing device 170 or the driving controller 285 can calculate an amount of increase in luminance relative to an input gray level, such as a graph such as GRxa.

Meanwhile, in response to the luminance of the light emitting diode at the input gray level of Prxa being Lx2, the signal processing device 170 or the driving controller 285 can calculate an amount of increase in luminance relative to an input gray level, such as a graph such as GRxb.

The signal processing device 170 or the driving controller 285 exhibits a significant difference from GRxm which is the actual luminance of the light emitting diode relative to the input gray level as in the drawing when the light emitting diode emits light, based on the graph such as GRxa or GRxb.

For example, the graph of GRxa has a problem in that the luminance of the light emitting diode relative to the input gray level decreases in an entire gray level range compared to GRxm. Furthermore, in response to the input gray level being near Prxb, there is a problem in that luminance uniformity is significantly broken.

Meanwhile, the graph of GRxb has a problem in that a low gray level expression ability is insufficient and a medium gray level or high gray level expression increases, in comparison with GRxm. Furthermore, in response to the input gray level being near Prxb, there is a problem in that the luminance uniformity is significantly broken.

FIG. 10B is a diagram illustrating another example of the luminance of the light emitting diode relative to the input gray level of the image signal input into the driving controller.

Referring to the drawing, a horizontal axis can represent an input gray level of an image signal input into the driving controller, and a vertical axis can represent luminance of the light emitting diode.

In the drawing, GRyn can represent an actual luminance of the light emitting diode relative to an input gray level of a first pixel PTy1.

In the drawing, GRyc can represent an actual luminance of the light emitting diode relative to an input gray level of a second pixel PTy2.

Meanwhile, in response to the input gray level of the image signal being Prya, calibration measurement can be performed.

Meanwhile, in response to the input gray level of the image signal being Pryb, the input gray level can be assigned to each of the plurality of subframe periods. That is, in response to the input gray level being Pryb, the input gray level can be assigned to each of the plurality of subframe periods.

Meanwhile, in response to the input gray level of the image signal being Pryb, calibration measurement can be performed. That is, two calibration measurements can be performed unlike FIG. 10A.

In response to the luminance of the light emitting diode at the input gray level of Prya being Ly1, the signal processing device 170 or the driving controller 285 can calculate an amount of increase in luminance relative to an input gray level, such as a graph such as GRya.

Meanwhile, in response to the luminance of the light emitting diode at the input gray level of Prya being Ly2, the signal processing device 170 or the driving controller 285 can calculate an amount of increase in luminance relative to an input gray level, such as a graph such as GRyb.

The signal processing device 170 or the driving controller 285 exhibits a significant difference from GRyn which is the actual luminance of the light emitting diode relative to the input gray level as in the drawing when the light emitting diode is made to emit light, based on the graph such as GRya or GRyb.

For example, the graph of GRya has a problem in that the luminance of the light emitting diode relative to the input gray level decreases in an entire gray level range compared to GRyn or GRyv. Furthermore, in response to the input gray level being near Pryb, there is the problem in that the luminance uniformity is significantly broken.

Meanwhile, the graph of GRyb has a problem in that a low gray level expression ability is insufficient and a medium gray level or high gray level expression increases, compared to GRyn. Furthermore, in response to the input gray level being near Pryb, there is the problem in that the luminance uniformity is significantly broken.

Meanwhile, as shown in FIG. 10B, during two calibration measurements, in response to the input gray level being Pryb, there is a disadvantage in that luminance measurement, etc., are not easy.

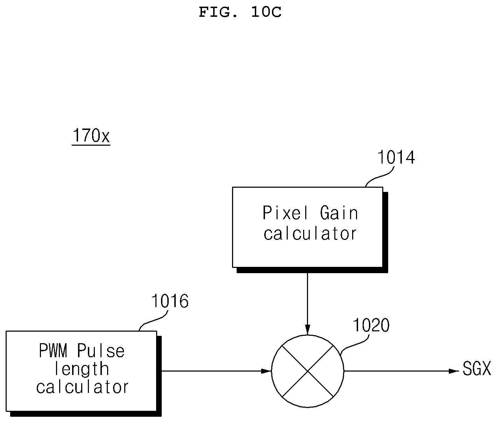

FIG. 10C illustrates an example of an internal block diagram of a signal processing device related to the operation of FIG. 10A or 10B.

Referring to the drawing, a signal processing device 170x related to the present disclosure can include a pixel gain calculator 1014, a pulse length calculator 1016, and a synthesizer 1020.

The pixel gain calculator 1014 can calculate a slope of the graph such as GRxa or GRxb in FIG. 10A.

Meanwhile, the pixel gain calculator 1014 can calculate a slope of the graph such as GRya or GRyb in FIG. 10B.

That is, the pixel gain calculator 1014 can calculate the amount of increase in luminance of the light emitting diode relative to the input gray level.

The pulse length calculator 1016 can calculate a pulse length of a data signal output by the driving controller 285 according to an input gray level.

Meanwhile, when the data signal is a pulse width modulation (PWM) based signal, the pulse length calculator 1016 can calculate a pulse length of a PWM pulse.

Next, the synthesizer 1020 can output an image signal SGX corresponding to the input gray level based on an output of the pixel gain calculator 1014 and an output of the pulse length calculator 1016. The image signal SGX in this case can be input into the driving controller 285.

Meanwhile, according to a driving scheme of FIG. 10C, as described in FIG. 10A or 10B, there is a problem in that the uniformity of the luminance of the light emitting diode relative to the input gray level is broken, and in particular, in response to the input gray level being near Prcb or Pryb, there is a problem in that the luminance uniformity is significantly broken.

FIG. 11 is a diagram illustrating an operation of an image display apparatus according to an embodiment of the present disclosure.

Referring to the drawing, the signal processing device 170 in the image display apparatus 100 according to an embodiment of the present disclosure can calculate a pixel gain (S1110).

For example, the signal processing device 170 according to an embodiment of the present disclosure can calculate the pixel gain based on an image signal.

Specifically, the signal processing device 170 can calculate the amount of increase in luminance of the light emitting diode relative to the input gray level.

In addition, the signal processing device 170 can calculate a pixel gain, which is a ratio of the amount in increase in luminance of the light emitting diode to a reference increase amount.

Next, the signal processing device 170 can calculate a gray level ratio.

For example, the signal processing device 170 can calculate a ratio R of a low gray level that is equal to or less than a reference level to a high gray level that is greater than the reference level.

Specifically, the signal processing device 170 can calculate a ratio R of the low gray level that is equal to or less than the reference level to the high gray level that is greater than the reference level.

Next, the signal processing device 170 can calculate the pulse length of the data signal (S1130).

For example, when the data signal is a pulse width modulation (PWM) based signal, the signal processing device 170 can calculate a pulse length of a PWM pulse.

Next, the signal processing device 170 can perform case classification for a plurality of gray level compensation modes based on the pixel gain, the gray level ratio, and the pulse length (S1135).

Meanwhile, the signal processing device 170 can select one of the plurality of gray level compensation modes based on the input gray level and a converted input gray level.

For example, the signal processing device 170 can determine whether there is a first case in which both the input gray level and the converted input gray level are less than a reference gray level Cbnd (S1142), and if so, perform a first gray level compensation mode (S1152).

In another example, the signal processing device 170 can determine whether there is a second case in which the input gray level is less than the reference gray level Cbnd and the converted input gray level is greater than the reference gray level Cbnd (S1144), and if so, perform a second gray level compensation mode (S1154).

In yet another example, the signal processing device 170 can determine whether there is a third case in which the input gray level is greater than the reference gray level Cbnd and the converted input gray level is less than the reference gray level Cbnd (S1146), and if so, perform a third gray level compensation mode (S1156).

In still another example, the signal processing device 170 can determine whether there is a fourth case in which both the input gray level and the converted input gray level are greater than the reference gray level Cbnd (S1148), and if so, perform a fourth gray level compensation mode (S1158).

Accordingly, it is possible to maintain luminance uniformity between pixels. In particular, flicker can be reduced while maintaining the luminance uniformity according to the input gray level.

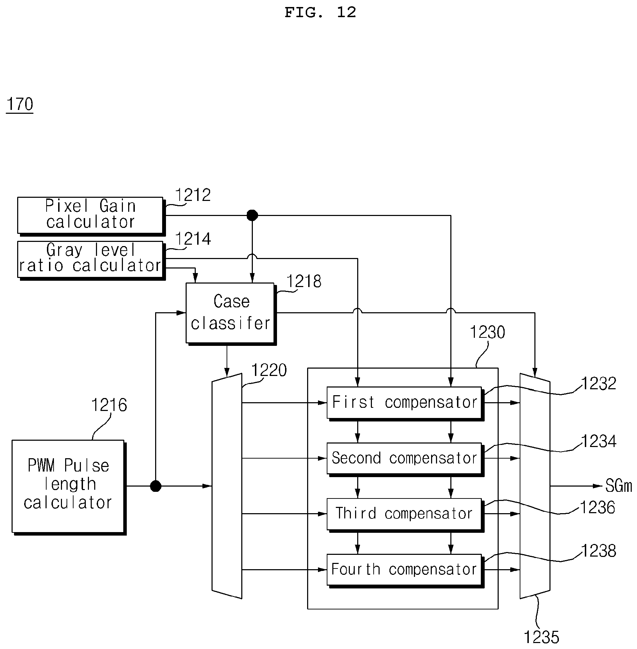

FIGS. 12 to 14 are diagrams referred to in the description of FIG. 11.

First, FIG. 12 illustrates an example of an internal block diagram of a signal processing device according to an embodiment of the present disclosure.

Referring to the drawing, a signal processing device 170 according to an embodiment of the present disclosure can include a pixel gain calculator 1212, a gray level ratio calculator 1214, a pulse length calculator 1216, a case classifier 1218, a case selector 1220, a gray level compensator 1230, and an output device 1235.

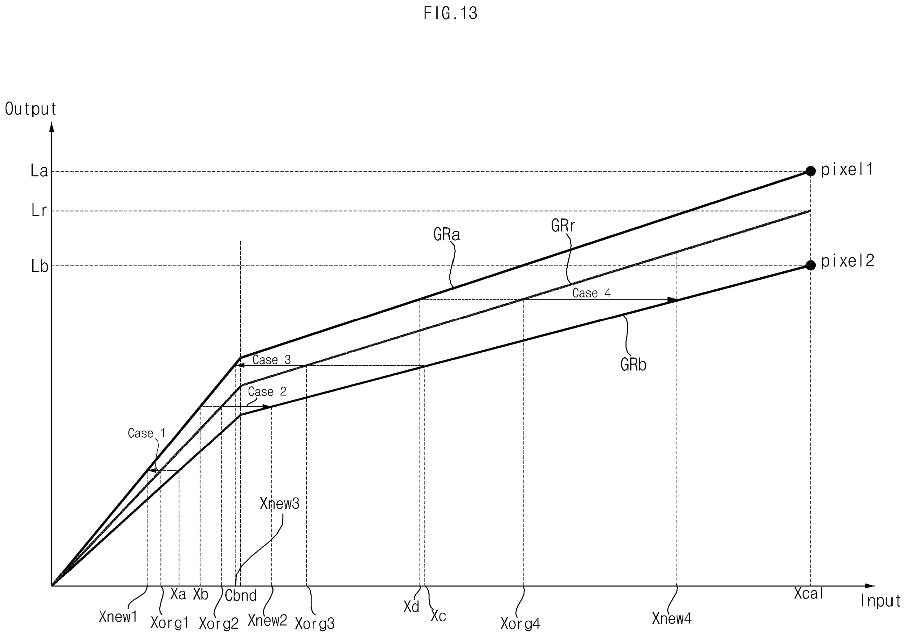

The pixel gain calculator 1212 can calculate a slope of a GRa graph of a first pixel pixel1 or a slope of a GRb graph of a second pixel pixel2 in FIG. 13.

For example, the pixel gain calculator 1212 can calculate an amount of increase in luminance of the light emitting diode relative to an input gray level greater than a reference gray level Cbnd of the first pixel pixel1.

Meanwhile, the pixel gain calculator 1212 can calculate an amount of increase in luminance of the light emitting diode relative to an input gray level less than the reference gray level Cbnd of the first pixel pixel1.

The pixel gain calculator 1212 can calculate a pixel gain, which is a ratio of the amount in increase in luminance of the light emitting diode and a reference increase amount as in Equation 1 below. [Equation 1] $g = At / A = Bt / B$

Here, g can represent the pixel gain, At can represent a reference luminance increase amount which is less than the reference gray level Cbnd, A can represent a luminance increase amount which is less than the reference gray level Cbnd, Bt can represent a reference luminance increase amount which is greater than the reference gray level Cbnd, and B can represent a luminance increase amount which is greater than the reference gray level Cbnd.

In another example, the pixel gain calculator 1212 can calculate an amount of increase in luminance of the light emitting diode relative to an input gray level greater than a reference gray level Cbnd of the second pixel pixel2.

Meanwhile, the pixel gain calculator 1212 can calculate an amount of increase in luminance of the light emitting diode relative to an input gray level less than the reference gray level Cbnd of the second pixel pixel2.

Meanwhile, the gray level ratio calculator 1214 can calculate a gray level ratio R that is a ratio of gray levels in the input gray levels of the image signal that are greater than the reference gray level Cbnd and a ratio of gray levels that are less than the reference gray level Cbnd.

Specifically, the gray level ratio calculator 1214 can calculate a ratio R of a low gray level which is equal to or less than the reference gray level relative to a high gray level greater than the reference gray level Cbnd in the input gray levels of the image signal, as in Equation 2 below. [Equation 2] $R = A / B$

Next, the pulse length calculator 1216 can calculate a pulse length of a data signal output by the driving controller 285 according to an input gray level.

Meanwhile, when the data signal is a pulse width modulation (PWM) based signal, the pulse length calculator 1216 can calculate a pulse length of a PWM pulse.

The case classifier 1218 can perform case classification for a plurality of gray level compensation modes based on the pixel gain, the gray level ratio, and the pulse length, similarly to the case classification S1135 in FIG. 11.

Next, the case selector 1220 can select one of the plurality of gray level compensation modes based on the input gray level and a converted input gray level.

For example, the case selector 1220 can select a first gray level compensation mode in response to both the input gray level and the converted input gray level being less than the reference gray level Cbnd.

In another example, the case selector 1220 can select a second gray level compensation mode when there is a second case in which the input gray level is less than the reference gray level Cbnd and the converted input gray level is greater than the reference gray level Cbnd.

In yet another example, the case selector 1220 can select a third gray level compensation mode when there is a third case in which the input gray level is greater than the reference gray level Cbnd and the converted input gray level is less than the reference gray level Cbnd.

In still yet another example, the case selector 1220 can select a fourth gray level compensation mode when there is a fourth case in which both the input gray level and the converted input gray level are greater than the reference gray level Cbnd.

Next, the gray level compensator 1230 can perform a gray level compensation mode according to the gray level compensation mode selected by the case selector 1220.

For example, a first gray level compensator 1232 in the gray level compensator 1230 can perform a first gray level compensation mode according to the selected first gray level compensation mode.

In another example, a second gray level compensator 1234 in the gray level compensator 1230 can perform a second gray level compensation mode according to the selected second gray level compensation mode.

In yet another example, a third gray level compensator 1236 in the gray level compensator 1230 can perform a third gray level compensation mode according to the selected third gray level compensation mode.

In still yet another example, a fourth gray level compensator 1238 in the gray level compensator 1230 can perform a fourth gray level compensation mode according to the selected fourth gray level compensation mode.

Meanwhile, the output device 1235 can output a signal that is subjected to gray level compensation by the gray level compensator 1230.

Specifically, the output device 1235 can output an image signal including a gray level that is subjected to gray level compensation by the gray level compensator 1230 to the driving controller 285, etc.

Accordingly, it is possible to maintain luminance uniformity between pixels. In particular, flicker can be reduced while maintaining the luminance uniformity according to the input gray level.

FIG. 13 is a diagram referred to in the description of FIG. 11 or 12.

Referring to the drawing, FIG. 13 is a diagram illustrating an example of a luminance of the light emitting diode relative to an input gray level of an image signal input into the driving controller according to an embodiment of the present disclosure.

Referring to the drawing, a horizontal axis can represent an input gray level of an image signal input into the driving controller, and a vertical axis can represent luminance of the light emitting diode.

In the drawing, GRa can represent an actual luminance of the light emitting diode relative to an input gray level of a first pixel pixel1.

In the drawing, GRb can represent an actual luminance of the light emitting diode relative to an input gray level of a second pixel pixel2.

In the drawing, GRr can represent a target luminance of the light emitting diode relative to the input gray level.

Meanwhile, in response to the input gray level of the image signal being Xcal, calibration measurement can be performed.

Meanwhile, in response to the input gray level of the image signal being a reference gray level Cbnd, the input gray level can be assigned to each of a plurality of subframe periods.

That is, in response to the input gray level being the reference gray level Cbnd, the signal processing device 170 can first assign an input gray level during each of the plurality of subframe periods.

Meanwhile, the signal processing device 170 can set a gray level to which the gray level is assigned to each of the plurality of subframe periods as the reference gray level Cbnd. Accordingly, it is possible to maintain luminance uniformity between pixels.

Meanwhile, in response to the luminance of the light emitting diode of the first pixel pixel1 at the input gray level of Xcal being La, the signal processing device 170 can calculate an amount of increase in luminance relative to an input gray level such as a graph such as GRa.

Meanwhile, in response to a luminance of the light emitting diode of the second pixel pixe12 at the input gray level of Xcal being Lb, the signal processing device 170 can calculate an amount of increase in luminance relative to an input gray level such as a graph such as GRb.

Meanwhile, the signal processing device 170 can calculate an amount of increase in luminance relative to the input gray level such as the graph such as GRr, based on the luminance of the light emitting diode of the first pixel pixel1 and the luminance of the light emitting diode of the second pixel pixe12 at the input gray level of Xcal.

Meanwhile, the signal processing device 170 according to an embodiment of the present disclosure performs a first gray level compensation mode for decreasing the input gray level of the first pixel pixel1 in response to the input gray level of the first pixel pixel1 being less than the reference gray level Cbnd, and performs a second gray level compensation mode for increasing the input gray level of the second pixel pixel2 and controlling the increased input gray level of the second pixel pixel2 to be greater than the reference gray level Cbnd when the input gray level of the second pixel pixel2 having an increase amount in luminance less than the first pixel pixel1 is less than the reference gray level Cbnd.

Meanwhile, the signal processing device 170 performs the first gray level compensation mode when there is the first case in which both the input gray level and the converted input gray level are less than the reference gray level Cbnd.

Meanwhile, the signal processing device 170 can perform the first gray level compensation mode based on a gain g of the first pixel pixel1 or a gain g of the second pixel pixel2, as shown in Equation 3 below. [Equation 3] $Xnew = At / A * Xorg = g * Xorg$

Here, Xnew can represent the input gray level, Xorg can represent the converted input gray level, g can represent a pixel gain, At can represent a reference luminance increase amount which is less than the reference gray level Cbnd, and A can represent a luminance increase amount which is less than the reference gray level Cbnd.

In the drawing, it is illustrated that when the first gray level compensation mode of the first pixel pixel1 is performed, an input gray level of Xorg1 is decreased and converted into an input gray level of xnew1.

That is, as shown in the drawing, while performing the first gray level compensation mode, if the first pixel pixel1 has a gray level less than the reference gray level Cbnd, the signal processing device 170 can decrease the input gray level of the first pixel pixel1.

Meanwhile, in the drawing, it is illustrated that when the first gray level compensation mode of the second pixel pixel2 is performed, the input gray level of Xorg1 is increased and converted into an input gray level of xa.

That is, as shown in the drawing, while performing the first gray level compensation mode, if the second pixel pixel2 has a gray level less than the reference gray level Cbnd, the signal processing device 170 can increase the input gray level of the second pixel pixel2. Accordingly, it is possible to maintain luminance uniformity between pixels.

Meanwhile, when there is the second case in which the input gray level is less than the reference gray level Cbnd and the converted input gray level is greater than the reference gray level Cbnd, the signal processing device 170 can perform the second gray level compensation mode.

Meanwhile, the signal processing device 170 can perform the second gray level compensation mode based on the gain g of the first pixel pixel1 or the gain g of the second pixel pixel2, and a ratio R of a low gray level which is equal to or less than a reference level to a high gray level greater than the reference level, as shown in Equation 4 below. [Equation 4] $\begin{matrix}Xnew = At / B * Xorg + Cbnd - A / B * Cbnd \\ = A / B * At / A * Xorg + Cbnd - A / B * Cbnd \\ = R * g * Xorg + Cbnd - R * Cbnd\end{matrix}$

Here, Xnew can represent the input gray level, Xorg can represent the converted input gray level, B can represent a luminance increase amount which is greater than the reference gray level Cbnd, and Cbnd can represent the reference gray level.

In the drawing, it is illustrated that when the second gray level compensation mode of the first pixel pixel1 is performed, an input gray level of Xorg2 is increased and converted into an input gray level of xnew2 which is greater than the reference gray level Cbnd.

That is, as shown in the drawing, in response to the input gray level of the second pixel pixel2 being a first level Xorg2 which is less than the reference gray level Cbnd, the signal processing device 170 can increase the input gray level of the second pixel pixel2 to a second level Xnew2 which is greater than the reference gray level Cbnd according to the second gray level compensation mode. Accordingly, it is possible to maintain luminance uniformity between pixels.

Meanwhile, the signal processing device 170 can control a magnitude Xnew2 - Xorg2 of the increase amount of the input gray level of the second pixel pixel2 in the second gray level compensation mode, to be greater than a magnitude Xorg1 - Xnew1 of a decrease amount of the input gray level of the first pixel pixel1 in the first gray level compensation mode. Accordingly, it is possible to maintain luminance uniformity between pixels.

Meanwhile, in response to the input gray level of the first pixel pixel1 being the first level Xorg2 which is less than the reference gray level Cbnd, the signal processing device 170 can decrease the input gray level of the first pixel pixel1 to a third level Xb which is less than the reference gray level Cbnd according to the first gray level compensation mode. Accordingly, it is possible to maintain luminance uniformity between pixels.

Meanwhile, in response to the input gray level being greater than the reference gray level Cbnd and the converted input gray level being less than the reference gray level Cbnd, the signal processing device 170 can perform the third gray level compensation mode.

For example, in response to the input gray level of the first pixel pixel1 being greater than the reference gray level Cbnd, the signal processing device 170 can perform the third gray level compensation mode for decreasing the input gray level of the first pixel pixel1 and controlling the decreased input gray level of the first pixel pixel1 to be less than the reference gray level Cbnd.

Meanwhile, the signal processing device 170 can perform the third gray level compensation mode based on the gain g of the first pixel pixel1 or the gain g of the second pixel pixel2, and the ratio R of the low gray level which is equal to or less than the reference level to the high gray level greater than the reference level, as shown in Equation 5 below. [Equation 5] $\begin{matrix}Xnew = Bt / A * Xorg - Bt / A & Cbnd + At / A * \\ Cbnd \\ = B / A * Bt / B * Xorg - B / A * Bt / B * Cbnd \\ + At / A * Cbnd \\ = 1 / R * g * Xorg - 1 / R * g * Cbnd + g * Cbnd\end{matrix}$

Here, Xnew can represent the input gray level, Xorg can represent the converted input gray level, B can represent the luminance increase amount which is greater than the reference gray level Cbnd, and g can represent the pixel gain.

In the drawing, it is illustrated that when the third gray level compensation mode of the first pixel pixel1 is performed, an input gray level of Xorg3 is decreased and converted into an input gray level of xnew3 which is less than the reference gray level Cbnd.

That is, as illustrated in the drawing, in response to the input gray level of the first pixel pixel1 being a fourth level Xorg3 which is greater than the reference gray level Cbnd, the signal processing device 170 can decrease the input gray level of the first pixel pixel1 to a fifth level Xnew3 which is less than the reference gray level Cbnd. Accordingly, it is possible to maintain luminance uniformity between pixels.

Meanwhile, in response to the input gray level of the second pixel pixel2 being the fourth level Xorg3 which is greater than the reference gray level Cbnd, the signal processing device 170 can increase the input gray level of the second pixel pixel2 to a sixth level Xc which is greater than the reference gray level Cbnd.

Meanwhile, the signal processing device 170 can perform the fourth gray level compensation mode in which both the input gray level and the converted input gray level are greater than the reference gray level Cbnd.

For example, in response to the second pixel pixel2 being greater than the reference gray level Cbnd, the signal processing device 170 can perform the fourth gray level compensation mode for increasing the input gray level of the second pixel pixel2.

Meanwhile, the signal processing device 170 can perform the fourth gray level compensation mode based on the gain g of the first pixel pixel1 or the gain g of the second pixel pixel2, and the ratio R of the low gray level which is equal to or less than the reference level to the high gray level greater than the reference level, as shown in Equation 6 below. [Equation 6] $\begin{matrix}Xnew = Bt / B * Xorg - Bt / B * bnd + At / B * \\ Cbnd - A / B * Cbnd \\ = Bt / B * Xorg - Bt / B * Cbnd + A / B * At / \\ A * Cbnd - A / B * Cbnd \\ = g * Xorg - g * Cbnd + R * g * Cbnd - R * Cbnd\end{matrix}$

Here, Xnew can represent the input gray level, Xorg can represent the converted input gray level, B can represent the luminance increase amount which is greater than the reference gray level Cbnd, and g can represent the pixel gain.

In the drawing, it is illustrated that when the fourth gray level compensation mode of the second pixel pixel2 is performed, an input gray level of Xorg4 is increased and converted into an input gray level of xnew4 which is greater than the reference gray level Cbnd.

That is, as illustrated in the drawing, when the input gray level of the second pixel pixel2 is Xorg4 which is greater than the reference gray level Cbnd, the signal processing device 170 can increase the input gray level of the second pixel pixel2 to Xnew4 which is greater than the reference gray level Cbnd. Accordingly, it is possible to maintain luminance uniformity between pixels.

Meanwhile, while performing the fourth gray level compensation mode, in response to the input gray level of the first pixel pixel1 being greater than the reference gray level Cbnd, the signal processing device 170 can decrease the input gray level of the first pixel pixel1 and control the decreased input gray level Xd of the first pixel pixel1 to be greater than the reference gray level Cbnd. Accordingly, it is possible to maintain luminance uniformity between pixels.

Meanwhile, while performing the fourth gray level compensation mode, the signal processing device 170 can control a magnitude Xnew4 - Xorg4 of the increase amount of the input gray level of the second pixel pixel2 in the fourth gray level compensation mode to be greater than a magnitude Xorg - Xd of a decrease amount of the input gray level of the first pixel pixel1. Accordingly, it is possible to maintain luminance uniformity between pixels.

Meanwhile, in response to an input gray level of a predetermined pixel pixel2 being less than the reference gray level Cbnd, a signal processing device 170 according to another embodiment of the present disclosure increases the input gray level of the pixel pixel2 and controlling the increased input gray level of the pixel pixel2 to be greater than the reference gray level Cbnd. Accordingly, it is possible to maintain luminance uniformity between pixels. In particular, flicker can be reduced while maintaining the luminance uniformity according to the input gray level.

In this case, in response to the input gray level of the second pixel pixel2 being greater than the reference gray level Cbnd, the signal processing device 170 can decrease the input gray level of the second pixel pixel2 and control the decreased input gray level of the second pixel pixel2 to be less than the reference gray level Cbnd.

In response to an input gray level of a predetermined pixel pixel1 being less than the reference gray level Cbnd, a signal processing device 170 according to yet another embodiment of the present disclosure decreases the input gray level of the pixel and controlling the decreased input gray level of the pixel pixel1 to be less than the reference gray level Cbnd. Accordingly, it is possible to maintain luminance uniformity between pixels. In particular, flicker can be reduced while maintaining the luminance uniformity according to the input gray level.

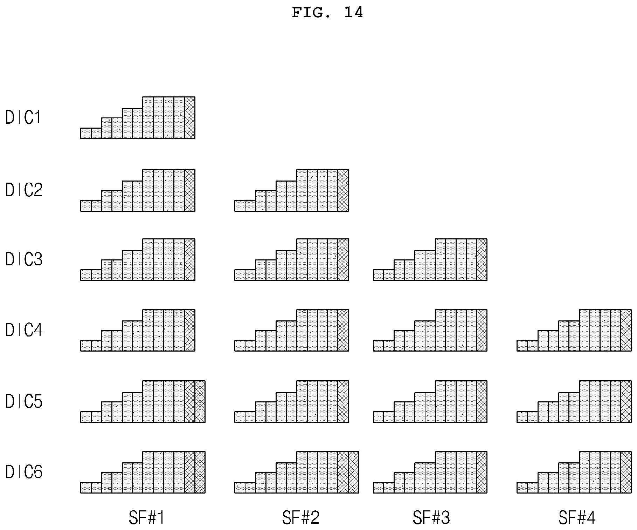

FIG. 14 is a diagram illustrating an example of a gray level assignment method according to an embodiment of the present disclosure.

Referring to the drawing, when a plurality of subframes are four subframes, the signal processing device 170 can assign an input gray level as illustrated in the drawing.

For example, in the case of a first gray level, the signal processing device 170 can assign the input gray level only to a first subframe as in DIC1.

Meanwhile, in the case of a second gray level, the signal processing device 170 can assign the input gray level only to the first subframe and a second subframe as in DIC2.

Meanwhile, in the case of a third gray level, the signal processing device 170 can assign the input gray level only to the first subframe, the second subframe, and a third subframe as in DIC3.

Meanwhile, in the case of a fourth gray level, the signal processing device 170 can assign the input gray level to each of the first subframe to a fourth subframe as in DIC4.

Accordingly, the signal processing device 170 can set the above-described reference gray level Cbnd to the fourth gray level.

Meanwhile, in the case of a fifth gray level, the signal processing device 170 can assign the input gray level to each of the first to fourth subframes, and then assign an additional gray level to the first subframe as in DIC5.

Meanwhile, in the case of a sixth gray level, the signal processing device 170 can assign the input gray level to each of the first to fourth subframes, and then assign additional gray levels to the first subframe and the second subframe as in DIC6. Accordingly, flicker can be reduced while maintaining the luminance uniformity according to the input gray level.

While the preferred embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical idea or prospect of the present disclosure.

## Claims

1. An image display apparatus comprising:
a panel including a plurality of light emitting diodes;
a signal processing device configured to output an image signal; and
a driving controller configured to output a scan signal for each of a plurality of subframe periods, and output a data signal for displaying an image, to the plurality of light emitting diodes based on the image signal,
wherein the signal processing device is configured to
in response to an input gray level of a first pixel being less than a reference gray level, perform a first gray level compensation mode for decreasing an input gray level of the first pixel, and
in response to an input gray level of a second pixel having a lower luminance increase amount than the first pixel and being less than the reference gray level, perform a second gray level compensation mode for increasing the input gray level of the second pixel and controlling the increased input gray level of the second pixel to be greater than the reference gray level.

2. The image display apparatus of claim 1, wherein the signal processing device is configured to,
while performing the first gray level compensation mode,
decrease the input gray level of the first pixel, in response to the first pixel being less than the reference gray level, and
increase the input gray level of the second pixel, in response to the second pixel being less than the reference gray level.

3. The image display apparatus of claim 1, wherein the signal processing device is configured to control a magnitude of an increase amount of the input gray level of the second pixel in the second gray level compensation mode to be greater than a magnitude of a decrease amount of the input gray level of the first pixel in the first gray level compensation mode.

4. The image display apparatus of claim 1, wherein the signal processing device is configured to increase the input gray level of the second pixel to a second level greater than the reference gray level, in response to the input gray level of the second pixel being a first level less than the reference gray level.

5. The image display apparatus of claim 4, wherein the signal processing device is configured to decrease the input gray level of the first pixel to a third level less than the reference gray level, in response to the input gray level of the first pixel being the first level less than the reference gray level.

6. The image display apparatus of claim 1, wherein in response to the input gray level of the first pixel being greater than the reference gray level, the signal processing device is configured to perform a third gray level compensation mode for decreasing the input gray level of the first pixel and controlling the decreased input gray level of the first pixel to be less than the reference gray level.

7. The image display apparatus of claim 6, wherein the signal processing device is configured to decrease the input gray level of the first pixel to a fifth level less than the reference gray level, in response to the input gray level of the first pixel being a fourth level greater than the reference gray level.

8. The image display apparatus of claim 7, wherein the signal processing device is configured to increase the input gray level of the second pixel to a sixth level greater than the reference gray level, in response to the input gray level of the second pixel being the fourth level greater than the reference gray level.

9. The image display apparatus of claim 1, wherein the signal processing device is configured to perform a fourth gray level compensation mode for increasing the input gray level of the second pixel, in response to the gray level of the second pixel being greater than the reference gray level.

10. The image display apparatus of claim 9, wherein the signal processing device is configured to,
while performing the fourth gray level compensation mode,
decrease the input gray level of the first pixel and control the decreased input gray level of the first pixel to be greater than the reference gray level, in response to the first pixel being greater than the reference gray level.

11. The image display apparatus of claim 9, wherein while performing the fourth gray level compensation mode, the signal processing device is configured to control a magnitude of an increase amount of the input gray level of the second pixel in the fourth gray level compensation mode to be greater than a magnitude of a decrease amount of the input gray level of the first pixel.

12. The image display apparatus of claim 1, wherein the signal processing device is configured to set a gray level, to which a gray level is assigned to each of the plurality of subframe periods, as the reference gray level.

13. The image display apparatus of claim 1, wherein the signal processing device is configured to perform the first gray level compensation mode based on a gain of the first pixel or a gain of the second pixel.

14. The image display apparatus of claim 1, wherein the signal processing device is configured to perform the second gray level compensation mode based on the gain of the first pixel or the gain of the second pixel, and a ratio of a low gray level which is equal to or less than the reference level to a high gray level greater than the reference level.

15. The image display apparatus of claim 6, wherein the signal processing device is configured to perform the third gray level compensation mode based on the gain of the first pixel or the gain of the second pixel, and the ratio of the low gray level which is equal to or less than the reference level to the high gray level greater than the reference level.

16. The image display apparatus of claim 9, wherein the signal processing device is configured to perform the fourth gray level compensation mode based on the gain of the first pixel or the gain of the second pixel, and the ratio of the low gray level which is equal to or less than the reference level to the high gray level greater than the reference level.

17. An image display apparatus comprising:
a panel including a plurality of light emitting diodes;
a signal processing device configured to output an image signal; and
a driving controller configured to output a scan signal for each of a plurality of subframe periods, and output a data signal for displaying an image, to the plurality of light emitting diodes based on the image signal,
wherein in response to an input gray level of a predetermined pixel being less than the reference gray level, the signal processing device is configured to increase the input gray level of the pixel and control the increased input gray level of the pixel to be greater than the reference gray level.

18. The image display apparatus of claim 17, wherein the signal processing device is configured to, in response to the input gray level of the second pixel being greater than the reference gray level, decrease the input gray level of the second pixel and control the decreased input gray level of the second pixel to be less than the reference gray level.

19. An image display apparatus comprising:
a panel including a plurality of light emitting diodes;
a signal processing device configured to output an image signal; and
a driving controller configured to output a scan signal for each of a plurality of subframe periods, and output a data signal for displaying an image, to the plurality of light emitting diodes based on the image signal,
wherein in response to an input gray level of a predetermined pixel being greater than a reference gray level, the signal processing device is configured to decrease the input gray level of the pixel and control the decreased input gray level of the pixel to be less than the reference gray level.

20. A video wall comprising:
a plurality of image display apparatuses,
wherein the image display apparatus is configured to include the image display apparatus of any one of claims 1 to 19.
